# FASCICULE DE BREVET EUROPEEN

(11) **EP 2 099 692 B1**
(45) Date de publication et mention de la délivrance du brevet: **24.04.2013**
(21) Numéro de dépôt: 07871867.3
(22) Date de dépôt: 14.12.2007
(51) Int. Cl.: B65D 59/06, F16L 57/00

(54) **DISPOSITIF DE PROTECTION D'UNE EXTRÉMITÉ MÂLE D'UN COMPOSANT DE JOINT FILETÉ TUBULAIRE.**
vORRICHTUNG ZUM SCHUTZ DES STECKERENDES EINER ROHRGEWINDESCHRAUBKOMPONENTE.
DEVICE FOR PROTECTING A MALE END OF A TUBULAR THREADED JOINT COMPONENT.

(30) Priorité: 19.12.2006 FR 0611065
(43) Date de publication de la demande: 16.09.2009
(73) Titulaire: VALLOUREC MANNESMANN OIL & GAS FRANCE, 59620 Aulnoye-Aymeries (FR); Vam Mexico Sa De Cv, 91697 Veracruz (MX)
(72) Inventeur: COURTOIS, Sébastien, F-01590 Lavancia-Epercy (FR); MOREL, Stéphane, F-39310 Les Moussieres (FR); CADIOU, Erwan, F-29000 Quimper (FR); VELASQUEZ, Roque, Veracruz (MX)
(74) Mandataire: de Kernier, Gabriel
(86) Numéro de dépôt international: PCT/FR2007/002076
(87) Numéro de publication internationale: WO 2008/087302

(56) Documents cités:
- WO-A-01/14686
- GB-A- 2 177 774
- US-A- 2 212 423
- US-A- 4 157 100
- US-A- 5 452 749
- US-A- 5 469 679

## Description

L'invention concerne les composants de joints filetés tubulaires, utilisés par exemple dans des applications pétrolières, et plus précisément la protection de l'extrémité mâle de certains de ces composants.

On entend ici par "composant" tout élément ou accessoire utilisé pour forer ou exploiter un puits et destiné à être assemblé par un filetage à un autre composant pour constituer avec cet autre composant un joint fileté tubulaire. Le composant peut être par exemple un tube de relativement grande longueur (notamment d'environ une dizaine de mètres de longueur), un manchon tubulaire de quelques dizaines de centimètres de longueur, un accessoire de ces tubes (dispositif de suspension ou « hanger », pièce de changement de section ou « cross-over », vanne de sécurité, connecteur pour tige de forage ou « tool joint », « sub », et analogues).

Les composants sont généralement assemblés les uns aux autres pour être descendus dans les puits d'hydrocarbures ou des puits similaires et constituer une garniture de forage, une colonne de tubes de cuvelage (« casing ») ou de tubage (« liners ») ou encore une colonne de tubes de production (« tubing ») (colonnes d'exploitation).

La spécification API 5CT émise par l'American Petroleum Institute (API), équivalente à la norme ISO 11960 : 2004 émise par l'International Standardisation Organisation (ISO), régit les tubes utilisés comme casing ou tubing, et la spécification API 5B définit des filetages standards pour ces tubes.

La spécification 7 de l'API définit des connecteurs filetés à épaulement pour tiges de forage rotatif.

Les fabricants de composants de joints filetés tubulaires ont également développé des joints filetés dits supérieurs qui présentent des géométries spécifiques des filetages, et des moyens spécifiques leur procurant de meilleures performances en service, notamment en matière de résistance mécanique et d'étanchéité. Des exemples de ces joints filetés supérieurs et de ces moyens spécifiques sont par exemple décrits dans les documents brevet EP 0488912, US 4,494,777 et EP 0767335.

Les composants précités comportent, une extrémité mâle filetée qui est destinée à être vissée à une extrémité femelle filetée d'un autre, composant de forage ou d'exploitation. Il est donc indispensable que leur extrémité mâle soit le moins possible endommagée, polluée et détériorée entre le moment où ils sortent de leur chaîne de fabrication et celui où ils sont utilisés, mais également entre deux utilisations successives. On comprendra qu'il est en effet nécessaire de protéger contre la corrosion, les poussières et les chocs (ou coups) non seulement le filetage, mais également les éventuelles portée(s) et butée(s) qui ont chacun des fonctions spécifiques et complémentaires, notamment en vue d'assurer une étanchéité en phase d'utilisation.

Les extrémités des composants précités sont généralement enduites juste avant leur assemblage d'une graisse à propriétés anti-grippantes. Le document API RP 5A3 (anciennement API Bul. 5A2) ou ISO 13678 : 2000 définit de telles graisses et les modalités d'application de ces graisses sont décrites dans le document API RP 5C1.

Toutefois les graisses selon le document API RP 5A3 présentent un certain nombre d'inconvénients liés à leur teneur en constituants toxiques, notamment en plomb, à l'excès de quantité de graisse appliquée et à la nécessité d'appliquer la graisse juste avant la descente des composants dans le puits.

Il a été ainsi proposé, notamment dans les documents brevet US 6,933,264, US 6,869,111 et WO 2003/102457, de remplacer la graisse, appliquée au pinceau en final sur l'extrémité du composant, par une fine couche, d'épaisseur prédéterminée appliquée en usine, d'un lubrifiant « semi-sec » exempt de métaux lourds.

Il a également été proposé, notamment dans les documents brevet US 6,027,145, EP 1211451 et FR 0510503 (demande de brevet publiée sous le numéro FR 2 892 174 postérieurement à la date de dépot, de remplacer la graisse appliquée au pinceau en final sur l'extrémité du composant par une fine couche, d'épaisseur prédéterminée appliquée en usine, d'un lubrifiant sec à base de particules de lubrifiants solides.

Dans ces cas de mise en oeuvre de lubrifiant sec ou semi-sec en usine, il est donc également et plus particulièrement nécessaire de protéger le mieux possible la couche de produit lubrifiant, dont les extrémités des composants sont enduites, tant d'un enlèvement mécanique que d'une pollution (sable, débris) préjudiciables à l'efficacité du produit lubrifiant.

Pour obtenir ce(s) protection(s), on place généralement, ainsi que l'exige la spécification API 5CT (au paragraphe 12.2), un dispositif de protection sur les extrémités mâle et femelle des composants de joints filetés tubulaires. De nombreux dispositifs de ce type ont été proposés, notamment dans les documents brevets EP 0148807, US 2006/0042709, WO 2005/075877 et WO 2005/024282, les trois derniers documents visant plus particulièrement les protecteurs pour joints préalablement enduits de lubrifiant en usine.

Du fait de leurs modes de réalisation respectifs, ces dispositifs de protection connus offrent une protection contre les chocs (ou coups) plutôt satisfaisante, mais, dans le cas des dispositifs de protection pour extrémité mâle, ils assurent une étanchéité en aval du filetage (donc dans une zone dont le diamètre est souvent celle du corps ou partie courante du composant) qui varie en fonction des variations dimensionnelles des composants. Ainsi, le diamètre extérieur d'un tube selon la spécification API 5CT peut varier de + ou - 0,79 mm pour les tubes de diamètre inférieur à 114,3 mm et de -0,5% à + 1 % du diamètre pour les tubes de diamètre supérieur ou égal à 114,3 mm (soit de -0,89 mm à +1,78 mm pour un tube de 177,8 mm de diamètre).

En d'autres termes, ces dispositifs de protection pour extrémité mâle n'offrent pas une adaptabilité de l'étanchéité aux écarts dimensionnels des composants (à moins d'usiner extérieurement les composants, ce qui crée des inconvénients) et peuvent être très serrant et donc difficiles à monter. Leur montage peut notamment conduire à endommager des parties du dispositif de protection et/ou à racler et retirer tout ou partie de la couche de produit lubrifiant qui enduit les extrémités mâles, notamment lorsqu'il est installé à demeure. Il faut en effet prendre en compte le fait qu'un protecteur doit pouvoir être facilement monté et démonté plusieurs fois, sans retirer le produit lubrifiant, de manière à permettre l'inspection des extrémités mâles durant le stockage des composants ou à protéger les extrémités mâles de composants retirés du puits.

Aucun dispositif de protection connu n'étant entièrement satisfaisant, l'invention a donc pour but d'améliorer la situation.

Elle propose à cet effet un dispositif, d'une part, destiné à protéger l'extrémité mâle d'un composant d'un joint fileté tubulaire pour le forage et l'exploitation de puits d'hydrocarbures, qui est munie extérieurement d'au moins un filetage extérieur et qui comprend une partie terminale libre, et d'autre part, comprenant :
- un corps protecteur réalisé sous la forme d'un premier manchon et chargé de protéger une partie au moins du filetage extérieur et la partie terminale libre, et
- un élément d'étanchéité propre à être placé au contact, d'une part, du composant, au moins dans une partie située en aval du filetage extérieur de l'extrémité mâle, et d'autre part, du corps protecteur afin d'assurer une première étanchéité en aval du filetage extérieur.

Ce dispositif se caractérise par le fait :
- qu'il comprend en outre des moyens de fixation chargés de déplacer l'élément d'étanchéité et/ou le corps protecteur radialement vers le composant en définissant des positions dites « ouverte » et « fermée » du dispositif, dans lesquelles l'élément d'étanchéité et/ou le corps protecteur sont respectivement sans contact et en contact serrant avec le composant, et
- que la première étanchéité est obtenue en position fermée du dispositif.

Le dispositif de protection selon l'invention peut se décliner selon de nombreuses variantes, dont certaines au moins des caractéristiques peuvent être combinées entre-elles, et notamment :
- la première étanchéité peut être assurée au niveau d'une partie courante du composant située immédiatement en aval de l'extrémité mâle ;
- il peut comprendre des moyens propres à assurer une seconde étanchéité au niveau de la partie terminale libre de l'extrémité mâle ;
   ➢ cette seconde étanchéité peut par exemple être assurée sur une surface annulaire transversale en extrémité de la partie terminale libre ;
- son corps protecteur peut recouvrir une surface annulaire transversale d'extrémité de la partie terminale libre ;
- son élément d'étanchéité peut être réalisé dans un matériau souple et élastique ;
- ses moyens de fixation peuvent être des moyens annulaires de bridage circonférentiel ;
- il peut être agencé de sorte qu'en position ouverte il puisse être emmanché librement sur l'extrémité mâle ;
- son élément d'étanchéité peut être réalisé sous la forme d'un second manchon ;
   - ce second manchon peut par exemple être réalisé dans un matériau transparent ;
   - ce second manchon peut par exemple être globalement disposé dans le prolongement axial du premier manchon. Dans ce cas, des moyens complémentaires de fixation peuvent être agencés sur le corps protecteur et sur l'élément d'étanchéité afin de solidariser le corps protecteur et l'élément d'étanchéité l'un à l'autre ;
      ■ l'élément d'étanchéité peut par exemple être réalisé sous la forme d'une bague comportant une partie destinée à recevoir les moyens de fixation et prolongée par un bord de forme générale tronconique de révolution. Dans ce cas, le corps protecteur peut comprendre une partie terminale s'étendant jusqu'à la partie terminale libre de l'extrémité mâle et, à l'opposé de cette partie terminale, une autre partie terminale comprenant une première sous-partie, de forme générale tronconique de révolution et destinée à être emmanchée en force sur le bord tronconique de l'élément d'étanchéité. La première sous-partie et le bord tronconique font alors partie des moyens complémentaires de fixation ;
         o la partie terminale peut alors éventuellement comprendre une seconde sous-partie munie d'un filetage intérieur destiné à être vissé sur une portion choisie du filetage extérieur de l'extrémité mâle ;
- en variante, le second manchon peut par exemple être intercalé entre l'extrémité mâle et le premier manchon sur au moins une partie de la longueur axiale du premier manchon ;
   ■ le second manchon peut alors éventuellement s'étendre jusqu'à recouvrir une surface annulaire transversale en extrémité de la partie terminale de l'extrémité mâle ;
   ■ le second manchon peut par exemple comprendre i) une première partie située au moins en partie au dessus du filetage extérieur de l'extrémité mâle, et ii) une seconde partie prolongeant la première partie du côté opposé à la partie terminale libre de l'extrémité mâle, découpée en languettes et propre à recevoir les moyens de fixation. Dans ce cas, les moyens de fixation peuvent comprendre, une bague ou un écrou destiné(e) à être placé sur la seconde partie en position ouverte, agencé(e) en coopération avec les languettes pour déplacer radialement les languettes vers l'extrémité mâle, suite à un déplacement axial des moyens de fixation, le long des languettes vers une extrémité libre de celles-ci, et immobiliser le second manchon par rapport au composant en aval du filetage extérieur de l'extrémité mâle dans la position fermée ;
      o la seconde partie peut éventuellement comporter un filetage extérieur conique. Dans ce cas, les moyens de fixation peuvent comprendre un écrou destiné à être placé sur la seconde partie en position ouverte, muni d'un filetage intérieur et destiné à être vissé de manière progressivement radialement serrante sur le filetage extérieur de la seconde partie de manière à déplacer radialement la bague vers le composant et à immobiliser la bague sur l'extrémité mâle en aval de son filetage extérieur dans la position fermée ;
      o la première partie du second manchon peut éventuellement comporter une première sous-partie destinée à être placée en aval du filetage extérieur de l'extrémité mâle au niveau d'un bombement intérieur annulaire qu'elle comprend et qui est agencé pour être comprimé radialement contre le composant en position fermée ;
      o la première partie du second manchon peut être éventuellement munie d'un filetage extérieur. Dans ce cas, d'une première part, le premier manchon peut comporter un filetage intérieur destiné à être vissé sur le filetage extérieur de la première partie du second manchon, d'une deuxième part, le filetage extérieur de la première partie du second manchon peut être situé au droit de la première sous-partie, et d'une troisième part, le filetage intérieur peut être situé sur une partie terminale du premier manchon ;
   ■ l'élément d'étanchéité peut éventuellement être réalisé sous la forme d'une bague comportant une partie principale destinée à être intercalée au moins partiellement entre (i) une première partie du premier manchon, située du côté opposé à la partie terminale de l'extrémité mâle, et (ii) le composant en aval du filetage extérieur de l'extrémité mâle, prolongée par un premier bord découpé en languettes, du côté opposé à la partie terminale de l'extrémité mâle, et destinée à recevoir les moyens de fixation. Dans ce cas, les moyens de fixation peuvent comprendre un moyen de bridage circonférentiel chargé de déplacer radialement la bague, au niveau de ses languettes, vers le composant et d'immobiliser la bague par rapport à l'extrémité mâle en aval du filetage extérieur de cette dernière dans la position fermée ;
      o la partie principale de la bague peut alors éventuellement comprendre un bombement intérieur annulaire, destiné à être pressé contre le composant en aval du filetage extérieur de l'extrémité mâle dans la position fermée ;
      o la première partie du premier manchon peut éventuellement comprendre un second filetage intérieur destiné à être vissé sur un filetage extérieur disposé sur la partie principale de la bague ;
   ■ le corps protecteur peut par exemple être vissé sur le second manchon avant que le dispositif ne soit disposé sur l'extrémité mâle ;
   ■ le corps protecteur peut par exemple être agencé de manière à être dévissé de ou revissé sur le second manchon après que ce dernier ait été immobilisé par rapport au composant en aval du filetage extérieur de l'extrémité mâle dans la position fermée ;
   ■ l'élément d'étanchéité peut par exemple comporter une première partie intermédiaire, placée en aval du filetage extérieur de l'extrémité mâle, et une partie d'extrémité qui prolonge la partie intermédiaire du côté opposé à la partie terminale de l'extrémité mâle, qui est découpée en languettes et qui est chargée de recevoir les moyens de fixation. Dans ce cas, les moyens de fixation peuvent comprendre un moyen de bridage circonférentiel chargé de déplacer radialement le second manchon, au niveau de ses languettes, vers le composant, et d'immobiliser le second manchôn, au niveau de ses languettes, par rapport à l'extrémité mâle en aval de son filetage extérieur dans la position fermée ;
      o la première partie intermédiaire du second manchon peut alors éventuellement comprendre un bombement intérieur annulaire et destiné à être comprimé contre le composant en aval du filetage extérieur de l'extrémité mâle dans la position fermée ;
      o la première partie intermédiaire du second manchon peut par exemple être munie d'un filetage extérieur. Dans ce cas, le premier manchon peut comprendre une partie terminale comportant un filetage intérieur destiné à être vissé sur le filetage extérieur du second manchon dans la position fermée, après placement du second manchon sur l'extrémité mâle ;
   ■ le second manchon peut par exemple être muni d'un filetage intérieur destiné à être vissé sur une portion choisie du filetage extérieur de l'extrémité mâle ;
   ■ ses moyens de fixation peuvent comprendre un moyen de bridage circonférentiel disposé autour du corps protecteur et chargé de déplacer radialement l'élément d'étanchéité vers et au contact du composant et d'immobiliser le corps protecteur et l'élément d'étanchéité par rapport à l'extrémité mâle dans la position fermée ;
      o le second manchon peut alors éventuellement comprendre un bombement extérieur au moins partiellement annulaire qui coopère avec un logement du premier manchon et agencé de manière à être comprimé radialement entre le premier manchon et l'extrémité mâle dans la position fermée ;
      o le premier manchon peut être éventuellement constitué de deux parties complémentaires agencées de manière à être solidarisées l'une à l'autre dans la position fermée ;
- son élément d'étanchéité peut être de forme générale extérieure tronconique de révolution. Dans ce cas, le premier manchon est de forme générale intérieure tronconique de révolution et apte à être emmanché de manière serrante sur l'élément d'étanchéité ;
- son élément d'étanchéité peut être réalisé sous la forme d'une bague. Dans ce cas, d'une part, le premier manchon peut comprendre i) une première partie comportant une première sous-partie qui définit un logement destiné à recevoir la bague avant placement du premier manchon sur l'extrémité mâle et à placer la bague en aval du filetage extérieur de l'extrémité mâle dans la position fermée, et ii) une seconde partie chargée de recevoir les moyens de fixation, et d'autre part, les moyens de fixation peuvent être chargés de déplacer radialement la seconde partie du premier manchon vers le composant et d'immobiliser la seconde partie par rapport à l'extrémité mâle en aval de son filetage extérieur dans la position fermée ;
   ➢ la seconde partie du premier manchon peut par exemple comporter au moins une ouverture axiale entourée partiellement par deux pattes placées en regard l'une de l'autre et munies chacune d'un trou. Dans ce cas, les moyens de fixation peuvent comprendre au moins un boulon destiné à être introduit dans les trous des pattes en regard et vissé, de manière à refermer les bords de l'ouverture en déplaçant radialement la seconde partie du premier manchon vers l'extrémité mâle et en immobilisant la seconde partie par rapport au composant en aval du filetage extérieur de l'extrémité mâle dans la position fermée ;
   ➢ en variante, la seconde partie du premier manchon peut par exemple être découpée en languettes et comporter un filetage extérieur. Dans ce cas, les moyens de fixation peuvent comprendre un écrou destiné à être placé sans être vissé sur la seconde partie du premier manchon avant son placement sur l'extrémité mâle et muni d'un filetage intérieur destiné à être vissé de manière radialement serrante sur le filetage extérieur de la seconde partie du premier manchon de manière à déplacer radialement la seconde partie du premier manchon au niveau des languettes vers l'extrémité mâle et à immobiliser la seconde partie du premier manchon par rapport au composant en aval du filetage extérieur de l'extrémité mâle dans la position fermée ;
   ➢ dans la position fermée, les moyens de fixation peuvent être chargés de comprimer radialement la bague entre le logement et le composant en aval du filetage extérieur de l'extrémité mâle ;
- son élément d'étanchéité peut être réalisé sous la forme d'une bague déformable comportant une partie centrale entre des première et seconde extrémités, la partie centrale étant propre à être arquée vers le composant suite à un effort axial de compression sur les extrémités de la bague déformable et à être plaquée contre le composant en aval du filetage extérieur de l'extrémité mâle dans la position fermée ;
   ➢ la bague déformable possède par exemple une longueur axiale qui est comprise entre 4 fois et 40 fois son épaisseur radiale ;
   ➢ la partie centrale de la bague déformable possède par exemple un plus petit diamètre que ses extrémités ;
   ➢ le premier manchon peut par exemple comprendre, d'une part, une partie terminale agencée de manière à recevoir la première extrémité de la bague pour la placer en aval du filetage extérieur de l'extrémité mâle, et d'autre part, une première partie intermédiaire munie d'un filetage extérieur. Dans ce cas, les moyens de fixation peuvent comprendre un écrou comportant une première partie agencée de manière à recevoir la seconde extrémité de la bague et une seconde partie munie d'un filetage intérieur destiné à être solidarisé au filetage extérieur de la première partie intermédiaire du premier manchon, de manière à permettre un déplacement axial de l'écrou sur le filetage extérieur du premier manchon, ce déplacement axial étant propre à exercer sur les première et deuxième extrémités de la bague un effort axial dirigé vers sa partie centrale de manière à l'arquer en la plaquant contre le composant en aval du filetage extérieur de l'extrémité mâle dans la position fermée ;
      ■ le filetage extérieur de la première partie intermédiaire du premier manchon peut par exemple être agencé de manière à permettre le déplacement axial de l'écrou par vissage sur le filetage extérieur du premier manchon ;
      ■ le filetage extérieur de la première partie intermédiaire du premier manchon peut par exemple être agencé de manière à permettre le déplacement axial, par clipsage, de l'écrou par rapport au filetage extérieur du premier manchon ;
         o le filetage extérieur de la première partie intermédiaire du premier manchon et/ou le filetage intérieur de la bague peu(ven)t alors posséder un profil de filet en dent de scie. Par exemple, le filetage extérieur de la première partie intermédiaire du premier manchon et/ou le filetage intérieur de la bague possède(nt) deux flancs d'inclinaisons différentes par rapport à l'axe du dispositif, l'inclinaison du flanc le moins incliné étant inférieure ou égale à trois fois le complément à 90 degrés de l'angle d'inclinaison du flanc le plus incliné ;
      ■ le premier manchon peut éventuellement comprendre un épaulement extérieur définissant une butée axiale pour l'écrou en position fermée du dispositif ;
   ➢ en variante, la partie terminale du premier manchon peut par exemple comporter un premier épaulement extérieur définissant une butée axiale. Dans ce cas, d'une première part, le premier manchon peut comprendre une première partie intermédiaire munie d'une seconde protubérance extérieure qui définit une butée anti-recul axial, d'une deuxième part, le dispositif peut comprendre en outre un élément de fixation comprenant un logement intérieur, de forme sensiblement identique à celle de la seconde protubérance anti-recul axial et un filetage extérieur, et propre à être initialement placé entre le premier épaulement extérieur et la seconde protubérance extérieure avant placement du dispositif pré-assemblé sur l'extrémité mâle dans la position ouverte, d'une troisième part, les moyens de fixation peuvent comprendre un écrou comportant une première partie agencée de manière à recevoir une seconde extrémité de la bague et une seconde partie munie d'un filetage intérieur destiné à être vissé sur le filetage extérieur de l'élément de fixation avant placement du dispositif pré-assemblé sur l'extrémité mâle dans la position ouverte, et d'une quatrième part, l'écrou est propre à être déplacé axialement en entraînant l'élément de fixation de sorte qu'en position fermée la seconde protubérance extérieure soit bloquée à l'intérieur de son logement, interdisant ainsi un déplacement axial en sens inverse de l'élément de fixation, et en arquant la bague de manière à la plaquer contre le composant en aval du filetage extérieur de l'extrémité mâle dans la position fermée ;
      ■ la seconde protubérance extérieure peut éventuellement posséder un profil dissymétrique avec un flanc relativement peu incliné et un flanc abrupt ;
      ■ le filetage intérieur de l'écrou et le filetage extérieur de l'élément de fixation peuvent éventuellement autoriser par leur coopération le dévissage de l'écrou, permettant ainsi le passage du dispositif d'une position fermée à une position ouverte en vue du retrait du premier manchon, et si besoin le revissage de l'écrou, permettant ainsi le retour du dispositif dans une position fermée ;
   ➢ la partie terminale du premier manchon peut par exemple comprendre des ouvertures. Dans ce cas, la première partie de la bague peut comprendre des saillies radiales destinées à être logées par clipsage à l'intérieur des ouvertures ;
      ■ le premier manchon peut être éventuellement muni d'un filetage intérieur destiné à être vissé sur une portion choisie du filetage extérieur de l'extrémité mâle ;
- le filetage extérieur de l'extrémité mâle peut comprendre au moins une zone de filets parfaits et au moins une zone de filets imparfaits. Dans ce cas, la portion choisie du filetage extérieur peut être disposée dans une zone des filets parfaits ; (S6, S9 à S11)
- son corps protecteur peut être réalisé dans un matériau thermoplastique choisi dans un groupe comprenant au moins les mélanges à base de polycarbonate, le polyoxyméthylène ou polyacetal (POM), et les polyéthylènes à haute densité (PE-HD) ou à ultra haute densité (PE-UHD) ;
   ➢ le matériau thermoplastique peut par exemple être au moins partiellement alvéolé ;
- son élément d'étanchéité peut être réalisé dans un matériau souple parmi au moins des caoutchoucs thermodurcissables et des élastomères thermoplastiques ;
   ➢ les caoutchoucs thermodurcissables peuvent par exemple être choisis parmi au moins les NBR et les CR ;
   ➢ les élastomères thermoplastiques peuvent par exemple être choisis parmi au moins les TPE-E et les TPE-U ;
- son extrémité mâle peut être revêtue en usine (là où elle est fabriquée) d'une couche mince de substance lubrifiante en vue de son vissage sur chantier de forage sur une extrémité femelle correspondante d'un autre composant.

L'invention propose également un premier procédé dédié à la mise en place d'un dispositif de protection de l'un au moins des types présentés ci-avant sur une extrémité mâle d'un composant d'un joint fileté tubulaire pour le forage et l'exploitation de puits d'hydrocarbures.

Ce premier procédé se caractérise par le fait que l'on pré-assemble le corps protecteur, l'écrou et la bague en position ouverte, puis on visse le dispositif jusqu'à appliquer le corps protecteur contre la surface annulaire transversale d'extrémité de la partie terminale libre de l'extrémité mâle de manière à réaliser une seconde étanchéité, et on visse l'écrou afin de définir la position fermée du dispositif et la première étanchéité.

L'invention propose également une première machine destinée à mettre en oeuvre le premier procédé présenté ci-avant, et comprenant à cet effet un moyen de maintien chargé de maintenir l'extrémité mâle, un premier moyen de vissage chargé de visser le corps protecteur sur l'extrémité mâle, un moyen de détection chargé de détecter la mise en contact du corps protecteur contre la surface annulaire transversale d'extrémité de la partie terminale libre de l'extrémité mâle et d'arrêter le premier moyen de vissage en cas de détection d'une mise en contact, et un second moyen de vissage chargé de visser l'écrou jusqu'à une position choisie pour définir la position fermée du dispositif.

L'invention propose également un deuxième procédé dédié à la mise en place d'un dispositif de protection de l'un au moins des types présentés ci-avant sur une extrémité mâle d'un composant d'un joint fileté tubulaire pour le forage et l'exploitation de puits d'hydrocarbures.

Ce deuxième procédé se caractérise par le fait que l'on pré-assemble le corps protecteur, l'écrou, l'élément de fixation et la bague en position ouverte, puis on visse le dispositif jusqu'à appliquer le corps protecteur contre la surface annulaire transversale d'extrémité de la partie terminale libre de l'extrémité mâle afin de réaliser une seconde étanchéité, et on pousse axialement sur l'écrou jusqu'à une position choisie, de manière à arquer la bague et ainsi définir la position fermée du dispositif et la première étanchéité. (S 10, S11)

Dans ce deuxième procédé, et en présence d'un premier manchon comprenant un épaulement extérieur définissant une butée axiale pour l'écrou en position fermée du dispositif, la position choisie peut résulter de l'appui de cet écrou contre l'épaulement extérieur du corps protecteur.

Dans une variante du deuxième procédé, qui correspond à d'autres modes de réalisation du dispositif, la position choisie peut être celle dans laquelle la seconde protubérance extérieure du corps protecteur est bloquée dans le logement de l'élément de fixation.

L'invention propose également une deuxième machine destinée à mettre en oeuvre le deuxième procédé présenté ci-avant, et comprenant à cet effet un moyen de maintien chargé de maintenir l'extrémité mâle, un moyen de vissage chargé de visser le corps protecteur sur l'extrémité mâle, un moyen de détection chargé de détecter la mise en contact du corps protecteur contre la surface annulaire transversale d'extrémité de la partie terminale libre de l'extrémité mâle et d'arrêter le premier moyen de vissage en cas de détection d'une mise en contact, et un moyen de poussée axiale chargé de pousser axialement sur l'écrou jusqu'à une position choisie pour définir la position fermée du dispositif.

L'invention propose également un troisième procédé dédié à l'inspection d'une extrémité mâle d'un composant d'un joint fileté tubulaire pour le forage et l'exploitation de puits d'hydrocarbures, cette extrémité mâle étant munie d'un dispositif de protection de l'un au moins des types présentés ci-avant.

Ce troisième procédé se caractérise par le fait qu'il consiste à désolidariser le corps protecteur et l'élément d'étanchéité, puis à retirer le corps protecteur de l'extrémité mâle en laissant en place l'élément d'étanchéité, puis à inspecter l'extrémité mâle, puis à replacer le corps protecteur sur l'extrémité mâle, et à solidariser de nouveau le corps protecteur et l'élément d'étanchéité.

Par ailleurs, ce troisième procédé peut permettre l'inspection de l'extrémité mâle par transparence à travers la première partie du second manchon.

D'autres caractéristiques et avantages de l'invention apparaîtront à l'examen de la description détaillée ci-après, et des dessins annexés, sur lesquels :

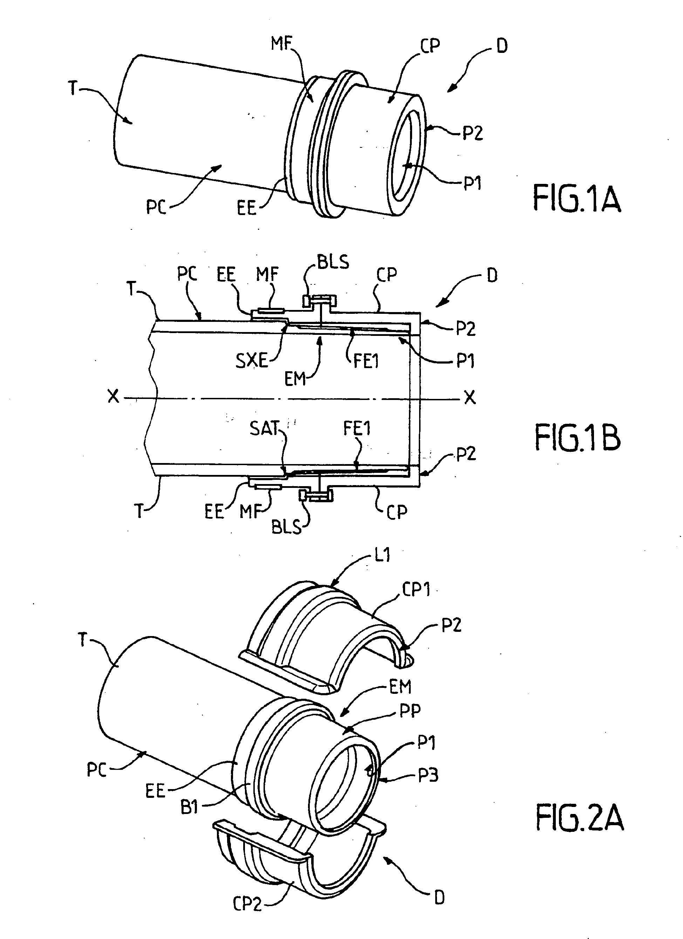

- les figures 1A et 1B illustrent de façon schématique, respectivement dans des vues en perspective et en coupe suivant l'axe XX du composant, un premier mode de réalisation d'un dispositif de protection selon l'invention, placé en position fermée sur une extrémité mâle d'un joint fileté tubulaire de type VAM FJL,

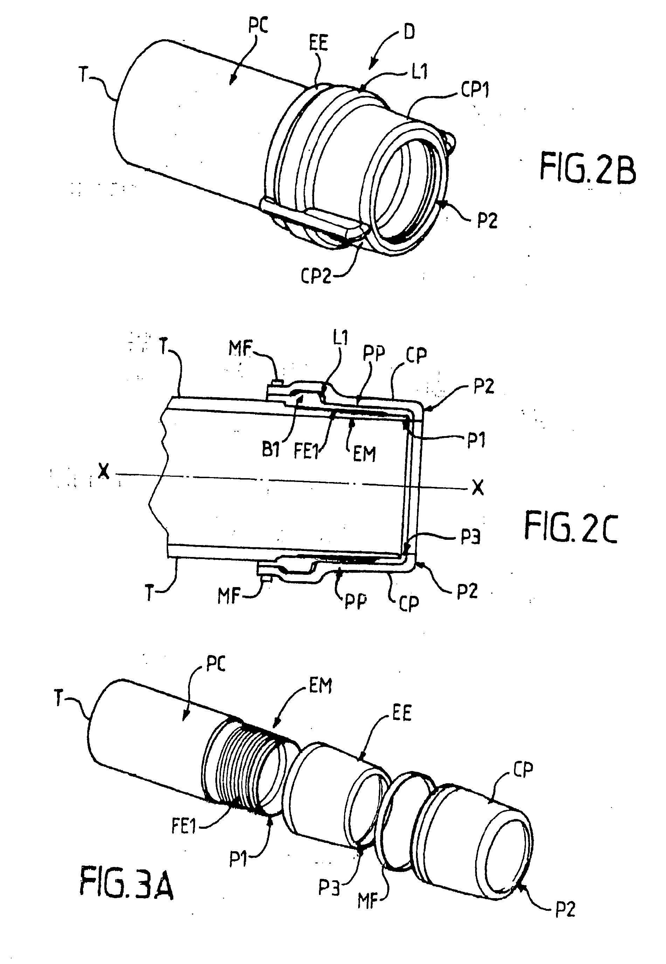

- les figures 2A, 2B et 2C illustrent de façon schématique, respectivement dans des vues en perspective éclatée, en perspective non éclatée et en coupe suivant l'axe XX du composant, un deuxième mode de réalisation d'un dispositif de protection selon l'invention, placé en position fermée sur une extrémités mâle d'un joint fileté tubulaire de type VAM FJL,

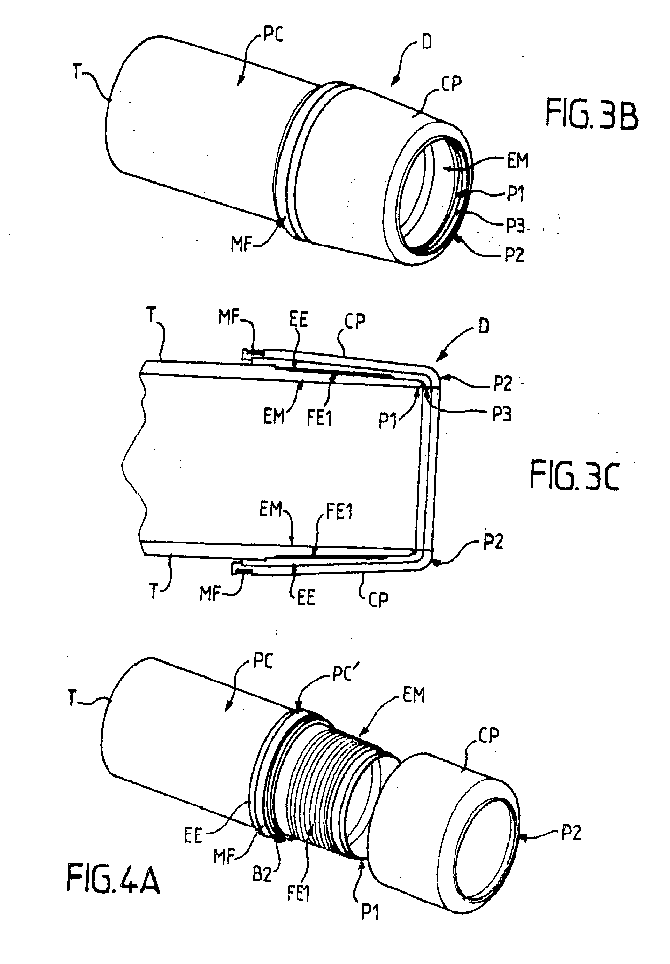

- les figures 3A, 3B et 3C illustrent de façon schématique, respectivement dans des vues en perspective éclatée avant placement, en perspective non éclatée après placement (position fermée) et en coupe suivant l'axe XX du composant après placement (position fermée), un troisième mode de réalisation d'un dispositif de protection selon l'invention d'une extrémité mâle d'un joint fileté tubulaire de type VAM FJL,

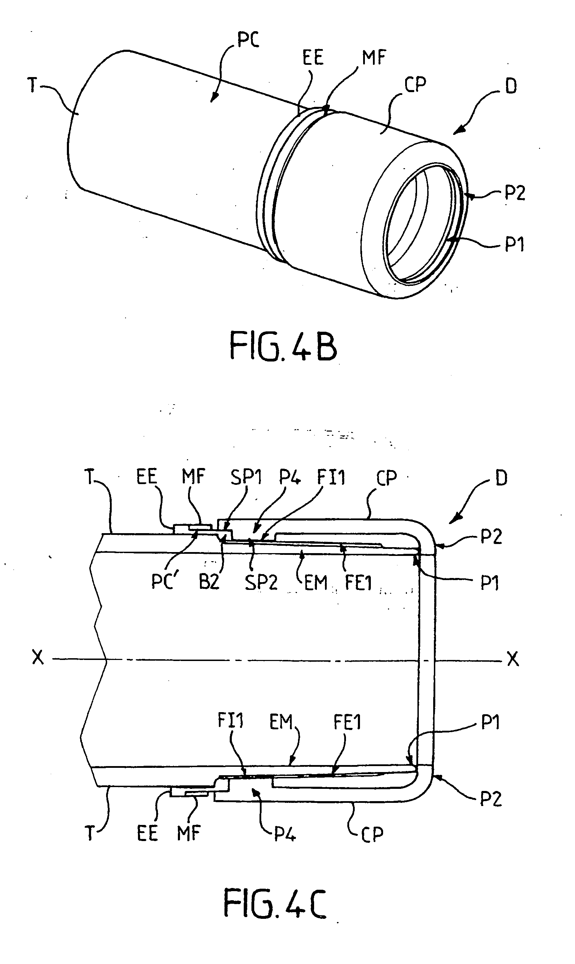

- les figures 4A, 4B et 4C illustrent de façon schématique, respectivement dans des vues en perspective éclatée en cours de placement, en perspective non éclatée après placement (position fermée) et en coupe suivant l'axe XX du composant après placement (position fermée), un quatrième mode de réalisation d'un dispositif de protection selon l'invention d'une extrémité mâle d'un joint fileté tubulaire de type VAM FJL,

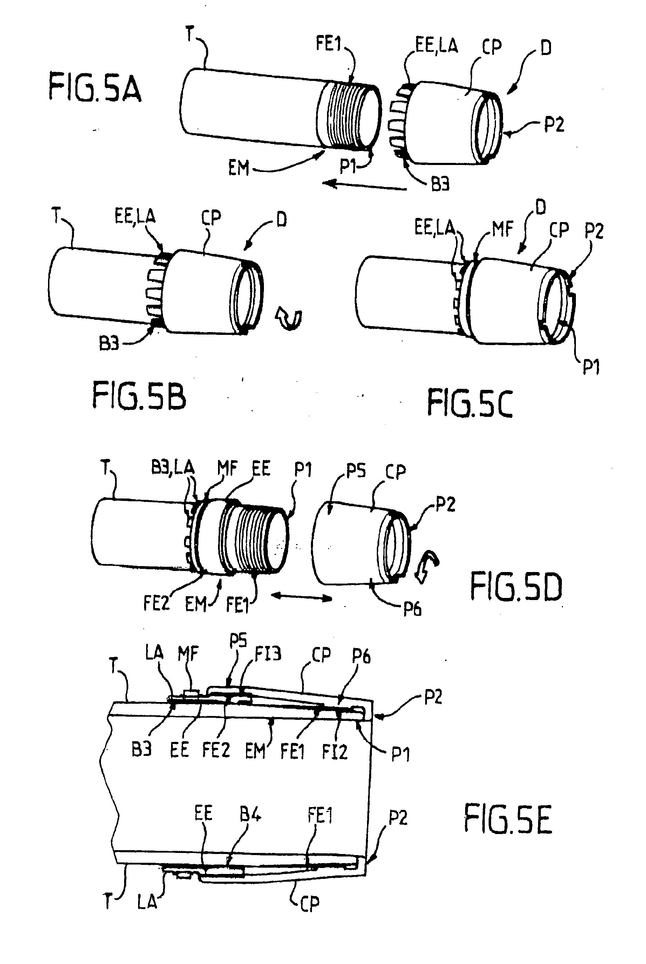

- les figures 5A, 5B, 5C, 5D et 5E illustrent de façon schématique, respectivement dans des vues en perspective éclatée avant placement, en perspective non éclatée en cours de placement (position ouverte), en perspective non éclatée après placement (position fermée) et en coupe suivant l'axe XX du composant après placement (position fermée), un cinquième mode de réalisation d'un dispositif de protection selon l'invention d'une extrémité mâle d'un joint fileté tubulaire de type VAM TOP,

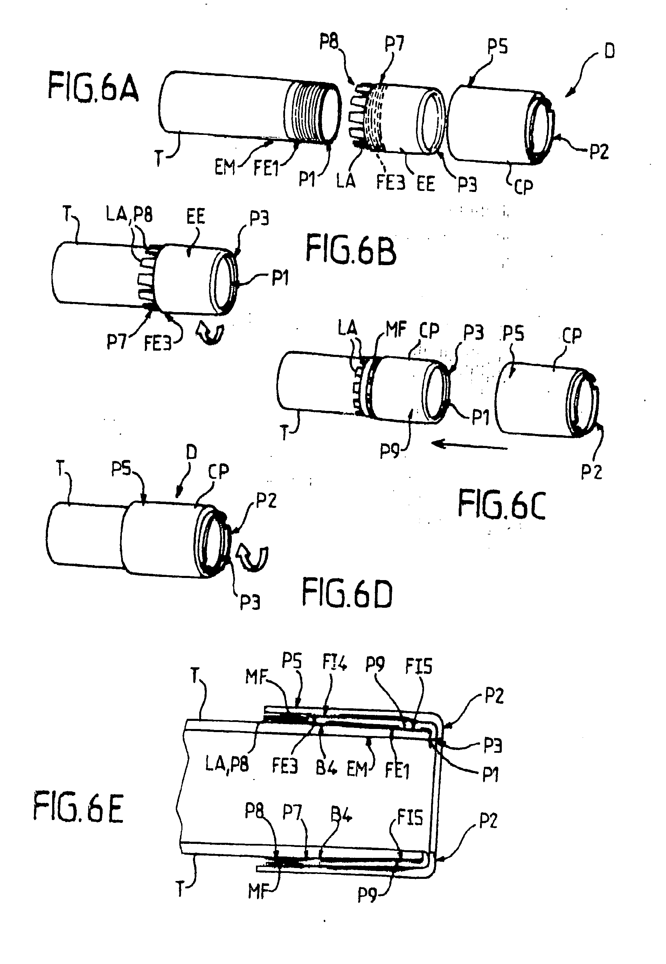

- les figures 6A, 6B, 6C, 6D et 6E illustrent de façon schématique, respectivement dans des vues en perspective éclatée avant placement, en perspective non éclatée en début de placement, en perspective éclatée en cours de placement (position ouverte), en perspective non éclatée après placement (position fermée) et en coupe suivant l'axe XX du composant après placement (position fermée), un sixième mode de réalisation d'un dispositif de protection selon l'invention d'une extrémité mâle d'un joint fileté tubulaire de type VAM TOP,

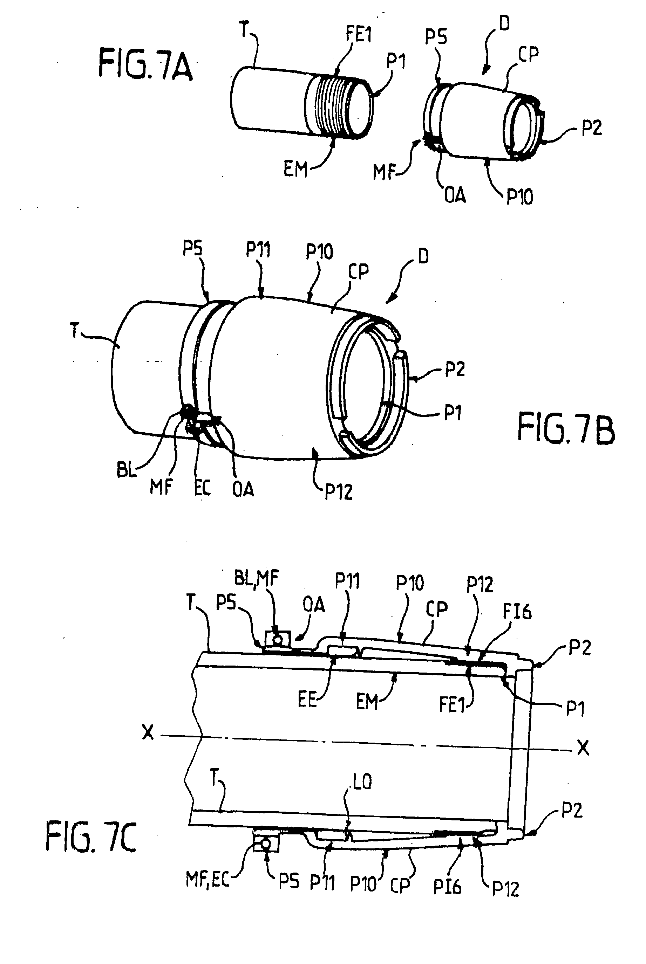

- les figures 7A, 7B et 7C illustrent de façon schématique, respectivement dans des vues en perspective éclatée avant placement, en perspective non éclatée après placement (position fermée) et en coupe suivant l'axe XX du composant après placement (position fermée), un septième mode de réalisation d'un dispositif de protection selon l'invention d'une extrémité mâle d'un joint fileté tubulaire de type VAM TOP,

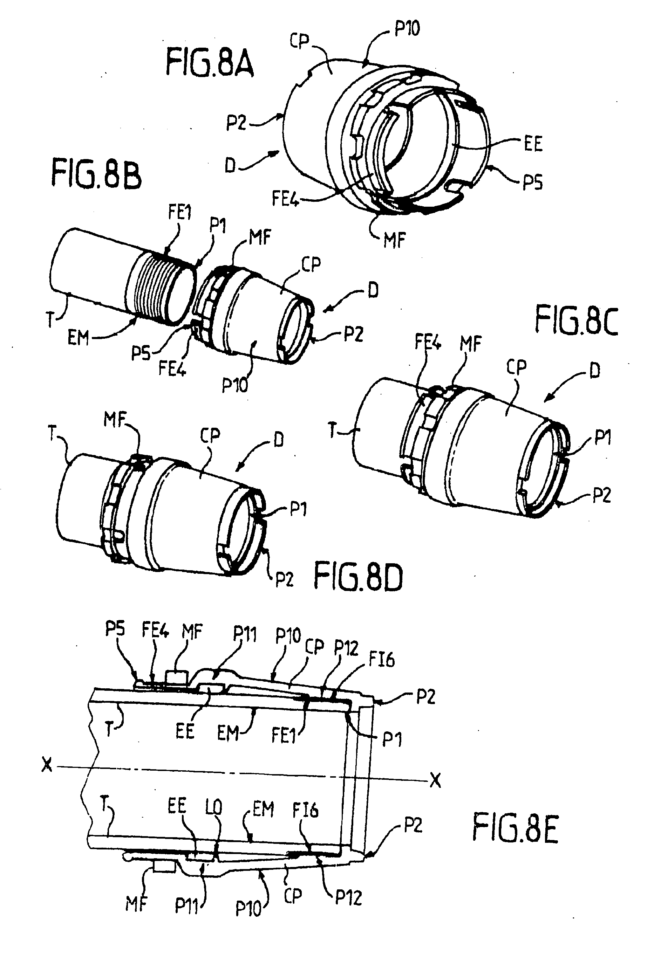

- les figures 8A, 8B, 8C, 8D et 8E illustrent de façon schématique, respectivement dans des vues en perspective avant placement, en perspective éclatée en début de placement, en perspective non éclatée en fin de placement (position ouverte), en perspective non éclatée après placement (position fermée) et en coupe suivant l'axe XX du composant après placement (position fermée), un huitième mode de réalisation d'un dispositif de protection selon l'invention d'une extrémité mâle d'un joint fileté tubulaire de type VAM TOP,

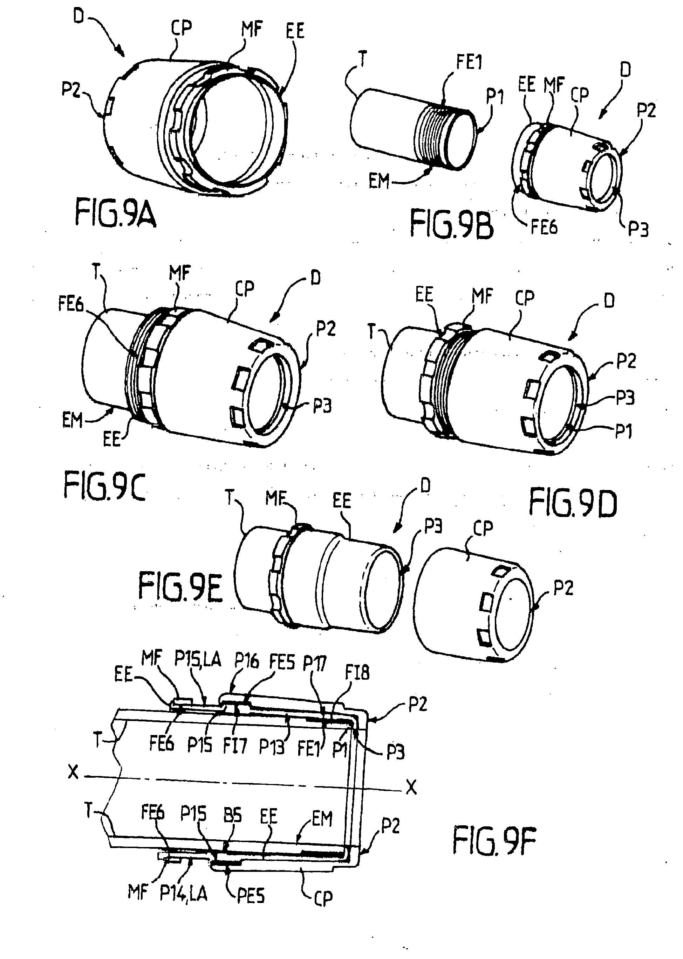

- les figures 9A, 9B, 9C, 9D 9E et 9F illustrent de façon schématique, respectivement dans des vues en perspective avant placement, en perspective éclatée en début de placement, en perspective non éclatée en fin de placement (position ouverte), en perspective non éclatée après placement (position fermée), en perspective éclatée pour inspection du filetage (position fermée), et en coupe suivant l'axe XX du composant après placement (position fermée), un neuvième mode de réalisation d'un dispositif de protection selon l'invention d'une extrémité mâle d'un joint fileté tubulaire de type VAM TOP,

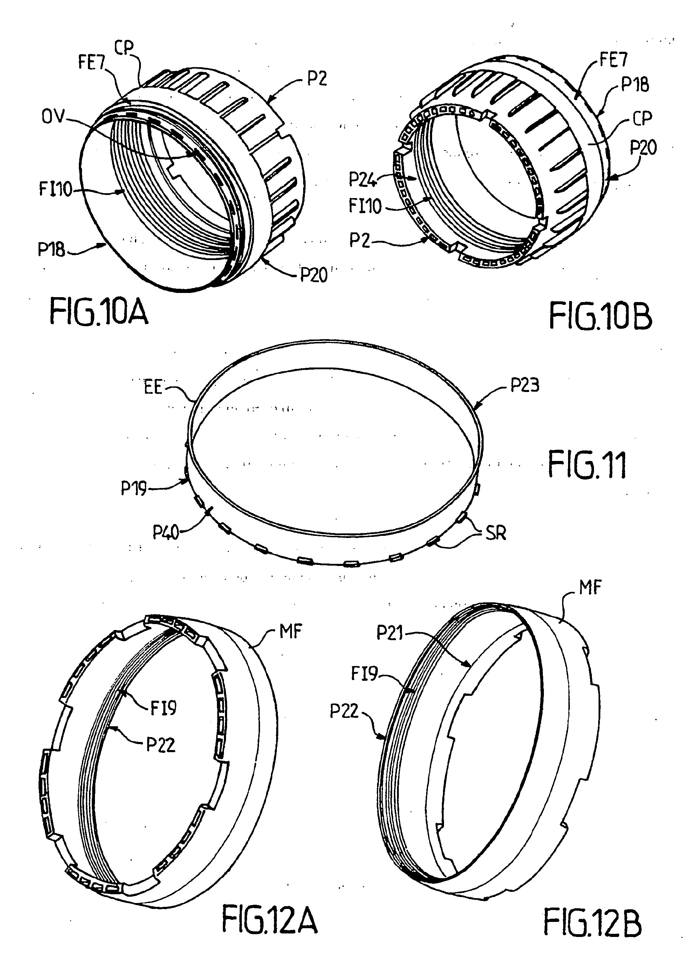

- les figures 10A et 10B illustrent de façon schématique, dans des vues en perspective sous deux angles différents avant assemblage, un corps protecteur d'un dixième mode de réalisation d'un dispositif de protection selon l'invention d'une extrémité mâle d'un joint fileté tubulaire de type VAM TOP,
- la figure 11 illustre de façon schématique, dans une vue en perspective avant assemblage, un élément d'étanchéité du dixième mode de réalisation du dispositif de protection selon l'invention,
- les figures 12A et 12B illustrent de façon schématique, dans des vues en perspective sous deux angles différents avant assemblage, un écrou (moyens de fixation) du dixième mode de réalisation du dispositif de protection selon l'invention,

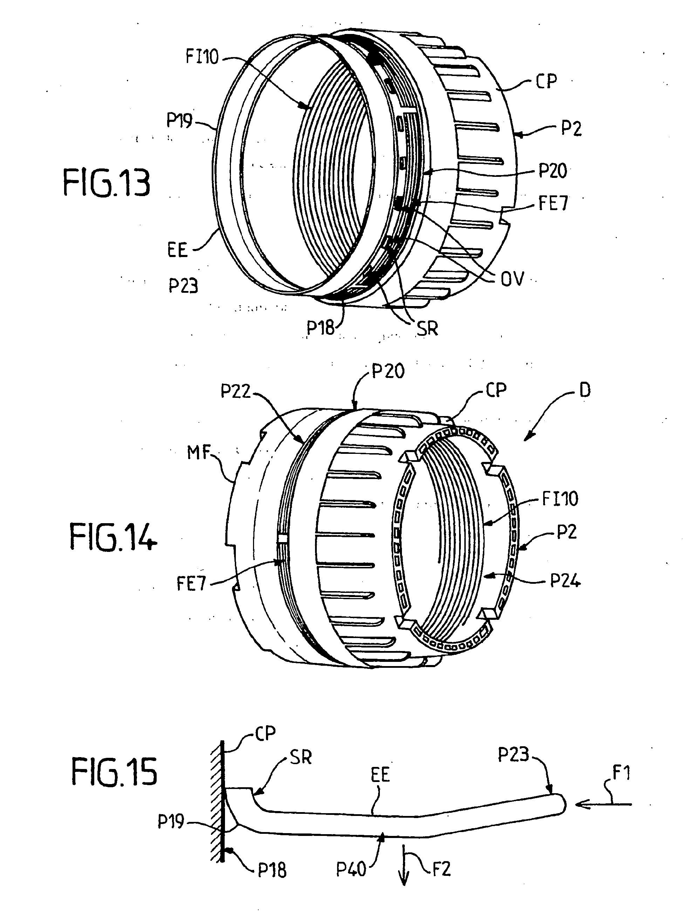

- la figure 13 illustre de façon schématique, dans une vue en perspective, l'assemblage du corps protecteur et de l'élément d'étanchéité du dixième mode de réalisation du dispositif de protection selon l'invention,
- la figure 14 illustre de façon schématique, dans une vue en perspective, l'assemblage complet du corps protecteur, de l'élément d'étanchéité et de l'écrou du dixième mode de réalisation du dispositif de protection selon l'invention,
- la figure 15, illustre de façon schématique, dans une vue en coupe transversale suivant l'axe XX du composant, les contraintes et déformations subies par l'élément d'étanchéité du dixième mode de réalisation du dispositif de protection selon l'invention lors du passage en position fermée du dispositif de protection,

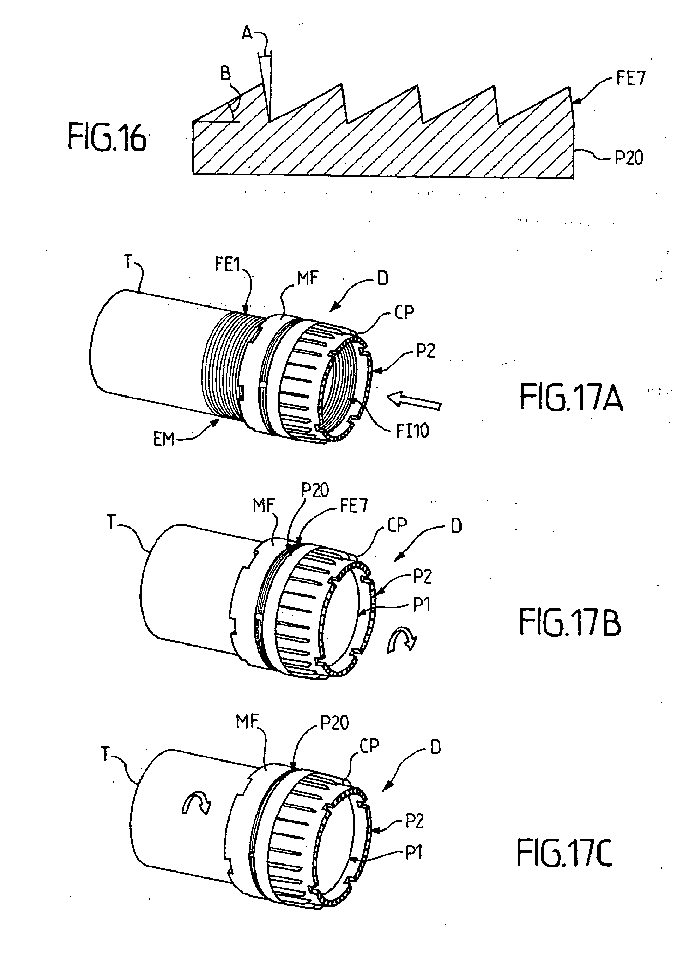

- la figure 16 illustre de façon schématique, dans une vue en coupe transversale suivant l'axe XX du composant, le filetage extérieur du corps protecteur du dixième mode de réalisation du dispositif de protection selon l'invention,
- les figures 17A, 17B et 17C illustrent de façon schématique, respectivement dans des vues en perspective non éclatée au début du placement, après placement en position ouverte et après placement en position fermée, le dixième mode de réalisation du dispositif de protection selon l'invention,

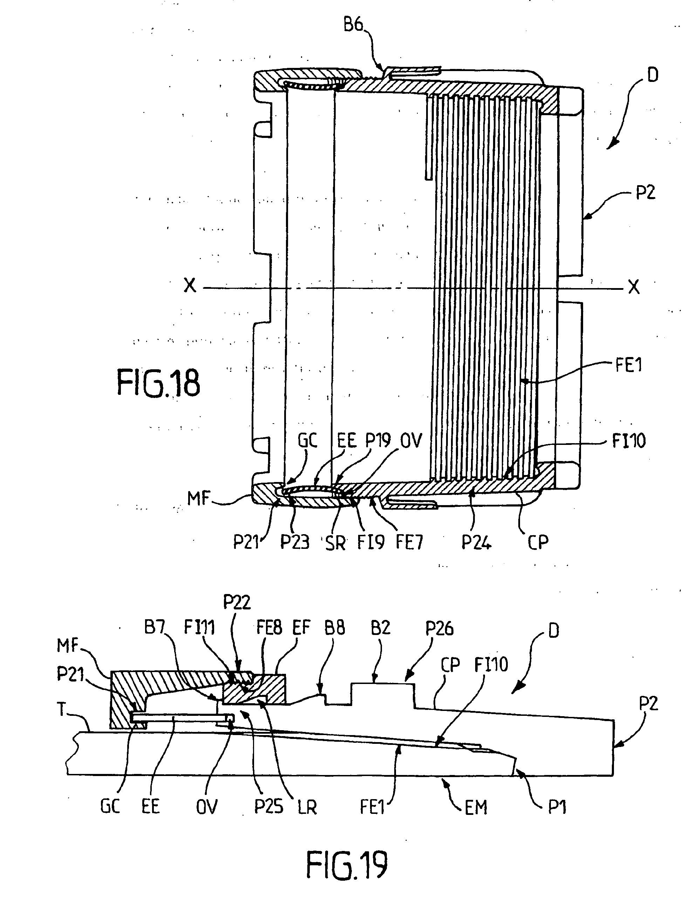

- la figure 18 illustre de façon schématique, dans une vue en coupe transversale suivant l'axe XX du composant après placement, le dixième mode de réalisation du dispositif de protection selon l'invention, et
- la figure 19 illustre de façon schématique, dans une vue en coupe transversale partielle suivant l'axe XX du composant, d'une partie d'un onzième mode de réalisation d'un dispositif de protection selon l'invention d'une extrémité mâle d'un joint fileté tubulaire de type VAM TOP en position ouverte après placement.

Les dessins annexés pourront non seulement servir à compléter l'invention, mais aussi contribuer à sa définition, le cas échéant.

L'invention a pour but de permettre la protection de l'extrémité mâle filetée d'un composant tubulaire d'un joint fileté tubulaire (destiné au forage ou à l'exploitation de puits d'hydrocarbures ou similaires) contre les endommagements mécaniques, les pollutions (chimiques et matérielles) et les détériorations (corrosion) entre le moment où il sort de sa chaîne de fabrication et celui où il est utilisé (avec plusieurs montages-démontages possibles du dispositif de protection), mais également entre deux utilisations successives, en limitant (voire même évitant) le raclage et/ou l'élimination du produit lubrifiant de stockage (anti-corrosion) et/ou de vissage, plus particulièrement lorsque ledit produit lubrifiant est appliqué de manière permanente (produit lubrifiant de type semi-sec ou sec présenté ci-avant), malgré les variations dimensionnelles du composant tubulaire (notamment de son diamètre extérieur). Elle a également pour but de permettre un montage en usine rapide, automatisable et fiable du dispositif de protection sur une extrémité mâle et de permettre une inspection facile de l'état des filetages avant utilisation ou entre deux utilisations successives du composant.

On considère dans ce qui suit que le composant est destiné au forage ou à l'exploitation de puits d'hydrocarbures et qu'il est équipé d'une extrémité mâle d'un joint fileté tubulaire manchonné de la famille VAM [marque déposée] ou équivalent. Mais, l'invention n'est limitée ni à ce type de composant, ni au type d'extrémité mâle précité. L'invention concerne en effet tout type de composant de joint fileté tubulaire pour le forage ou l'exploitation et tout type d'extrémité mâle filetée de composant et notamment ceux de type API et ceux de type supérieur (« premium »), tels que les joints filetés tubulaires VAM.

Par ailleurs, on entend ici par « extrémité mâle » une extrémité mâle de composant (ci-après appelé « tube » à titre d'exemple purement illustratif) pourvue d'un filetage extérieur et d'une partie terminale libre. Le terme extrémité mâle (EM) ne désigne donc pas seulement la surface en extrémité libre du tube (T), mais également toute la partie du tube (T) comprenant les moyens (mâles) de connexion à un autre composant de joint fileté tubulaire muni de moyens femelles de connexion (extrémité femelle).

Il est rappelé qu'un tube ou composant (T) comprend un corps ou partie courante (PC) terminé par une extrémité mâle (EM) ou une extrémité femelle.

Le filetage extérieur peut être en une ou plusieurs parties filetées distinctes, disposée(s) selon des surfaces cylindriques ou coniques.

Lorsque la ou une partie filetée est conique, celle-ci peut être subdivisée en une sous-partie dite à filets parfaits, dont le profil est constant et sans irrégularité ou imperfection (par exemple du type bavure) et une sous-partie dite à filets évanouissants ou imparfaits, dont la hauteur est progressivement décroissante et dont le profil peut présenter des irrégularités ou imperfections.

Le filetage de l'extrémité mâle du composant peut comprendre au moins deux parties filetées distinctes distantes axialement et/ou radialement l'une de l'autre, chacune de ces parties pouvant comprendre des filets parfaits et évanouissants.

La partie terminale libre de l'extrémité mâle du composant se termine généralement par une surface annulaire d'orientation sensiblement transversale.

L'extrémité mâle peut également comporter une ou plusieurs surfaces de butée axiale pour une extrémité femelle d'un autre composant destiné à être assemblé au composant considéré (en extrémité libre, en aval du filetage ou entre deux parties filetées) et une ou plusieurs surfaces d'étanchéité métal/métal (en extrémité libre, en aval du filetage ou entre deux parties filetées) avec l'extrémité femelle considérée. Le dispositif de protection selon l'invention est préférablement conçu pour également protéger ces surfaces de butée et/ou ces surfaces d'étanchéité des endommagements ou blessures et de la corrosion.

Les modes de réalisation exposés ci-après, à titre d'exemple non limitatifs, sont pour certains relatifs à une extrémité mâle d'un joint fileté tubulaire manchonné VAM TOP [marque déposée], pour d'autres relatifs à une extrémité mâle d'un joint fileté tubulaire intégral « flush » VAM FJL (décrit notamment dans le document brevet GB 1587836).

Il est rappelé qu'une extrémité mâle de joint fileté tubulaire VAM TOP comprend :
- un filetage conique avec une sous-partie à filets parfaits du côté de la partie terminale libre et une sous-partie à filets évanouissants du côté du corps (ou partie courante) du composant ;
- une surface de butée constituée par la surface annulaire transversale de la partie terminale libre de l'extrémité mâle ; et
- une surface d'étanchéité inétal/métal adjacente à la surface de butée sur la surface périphérique extérieure de la partie terminale libre.

Une extrémité mâle de joint fileté tubulaire VAM FJL comprend :
- un filetage conique avec une sous-partie à filets parfaits du côté de la partie terminale libre et une sous-partie à filets évanouissants du côté du corps (ou partie courante) du composant ;
- une butée dite externe en aval du filetage présentant une surface annulaire transversale de butée ; et
- deux surfaces d'étanchéité, une surface d'étanchéité externe adjacente à la surface de butée externe et une surface d'étanchéité interne adjacente à une surface annulaire transversale en partie terminale libre de l'extrémité mâle.

On se réfère tout d'abord aux figures 1A et 1B pour présenter l'invention et détailler sa mise en oeuvre sous la forme d'un premier mode de réalisation.

Un dispositif de protection D selon l'invention comprend d'une manière générale un corps protecteur CP, un élément d'étanchéité EE et des moyens de fixation MF destinés à coopérer ensemble une fois placés sur l'extrémité mâle (filetée) EM d'un tube T.

Le corps protecteur CP est réalisé sous la forme d'un premier manchon (monobloc ou non). Il est chargé de protéger une partie au moins du filetage extérieur FE1 de l'extrémité mâle EM et la partie terminale libre P1. Il comprend une partie terminale P2 destinée à être placée au niveau de la partie terminale libre P1, et présentant de préférence une projection radiale, vers l'intérieur en forme de collerette, épaisse et adaptée pour l'absorption des chocs et coups, et destinée à recouvrir la surface annulaire transversale en extrémité de la partie terminale libre P1 de l'extrémité mâle EM (surface de butée) afin d'assurer une (seconde) étanchéité continue locale sur toute sa circonférence à ce niveau.

On entend ici par « extérieur » un élément disposé selon une surface (ou une surface) qui est orienté(e) dans une direction radialement opposée à l'axe XX de l'extrémité mâle. A l'inverse, on entend ici par « intérieur » un élément (ou une surface) qui est orienté(e) vers, l'axe XX de l'extrémité mâle.

La protection étant notamment mécanique, le corps protecteur CP doit présenter une certaine rigidité tout en étant capable d'absorber au moins partiellement les coups. Pour ce faire, il peut par exemple être réalisé par injection d'un matériau thermoplastique dans un moule adapté. Parmi les différentes familles de matériaux thermoplastiques qui peuvent être avantageusement utilisées, on peut notamment citer les mélanges à base de polycarbornate comme le polycarbonate-polyester (PC-PBT ou PC-PET), le polyoxyméthylène ou polyacetal (POM) et les polyéthylènes (PE) à haute ou ultra haute densité (PE-HD, PE-UHD).

La spécification API 5CT édition 2005 prévoit dans son annexe I des exigences pour les dispositifs de protection de filetages, notamment des valeurs minimales de résistance aux chocs axiaux et de biais (à 45°) pour trois températures (-46, +21 et +66°C).

On peut par exemple plus particulièrement choisir un PE-HD produit par la société BASELL et vendu sous le nom LUPOLEN 4261 AG UV 6005, un PE-UHD produit par la société TICONA et vendu sous le nom GUR 5113, un PC-PBT produit par la société BAYER et vendu sous le nom MAKROBLEND S7916, ou un POM produit par la société DU PONT et vendu sous le nom DELRIN 127UV.

On notera que le corps protecteur CP peut être éventuellement partiellement (au moins) alvéolé, notamment dans ses portions épaisses, afin de mieux absorber les coups.

L'élément d'étanchéité EE est destiné à être placé au contact, d'une part, du composant T, au moins dans une partie qui est située en aval du filetage extérieur FE1 de l'extrémité mâle EM (dans la position fermée du dispositif D), et d'autre part, du corps protecteur CP. Il est plus précisément destiné à assurer une première étanchéité en aval du filetage extérieur FE1. Le mot « aval » doit être ici considéré par rapport à la partie terminale libre P1 de l'extrémité mâle EM.

L'élément d'étanchéité EE est préférentiellement réalisé dans un matériau souple, c'est-à-dire déformable, et élastique, c'est-à-dire pouvant reprendre sensiblement sa forme initiale. Pour ce faire, il peut par exemple être réalisé par injection dans un matériau souple résistant à la corrosion et aux attaques chimiques. Parmi les différentes familles de matériaux qui peuvent être avantageusement utilisées, on peut notamment citer les caoutchoucs thermodurcissables, et notamment ceux de type NBR ou CR, et les élastomères thermoplastiques, et notamment ceux de type TPE-E ou TPE-U.

Le corps protecteur CP et l'élément d'étanchéité EE coopèrent préférentiellement ensemble pour assurer l'étanchéité du filetage extérieur FE1 de l'extrémité mâle EM.

Les moyens de fixation MF sont plus précisément chargés de déplacer une partie du corps protecteur CP et/ou de l'élément d'étanchéité EE radialement vers l'axe XX du dispositif D, et donc vers le composant (T), en définissant des positions dites « ouverte » et « fermée » du dispositif D dans lesquelles l'élément d'étanchéité EE et/ou le corps protecteur CP sont aptes respectivement à être sensiblement sans contact et en contact serrant avec la paroi extérieure de l'extrémité mâle EM dans une zone située en aval du filetage extérieur FE1 de l'extrémité mâle EM.

Selon l'invention, la première étanchéité est obtenue en position fermée du dispositif D par le contact serrant étanche entre l'élément d'étanchéité EE et le composant T en aval du filetage extérieur FE1.

La zone située en aval du filetage extérieur FE1 pouvant appartenir au corps (ou partie courante) PC du tube T, elle possède un diamètre susceptible de varier notablement d'un tube à l'autre (par exemple de 1,5% du diamètre pour les tubes de diamètre extérieur supérieur ou égal à 114,3 mm). L'invention a notamment pour but de placer (installer) le dispositif D sans que ses parties les plus intérieures ne viennent racler la surface du composant T sur sa partie courante PC ou sur son extrémité mâle EM (position ouverte) tout en assurant un bon contact serrant en position fermée.

Le dispositif D peut se décliner selon de nombreux modes de réalisation. Un premier mode de réalisation est illustré sur les figures 1A et 1B. Dans ce premier mode de réalisation, l'élément d'étanchéité EE est réalisé sous la forme d'un second manchon, et les moyens de fixation MF sont chargés de déplacer radialement l'élément d'étanchéité EE vers et au contact du composant T de manière à serrer l'élément d'étanchéité EE sur ce composant T en aval du filetage extérieur FE1 et à immobiliser l'ensemble constitué du corps protecteur CP et de l'élément d'étanchéité EE par rapport à l'extrémité mâle EM dans la position fermée.

Les premier CP et second EE manchons sont par exemple de forme générale cylindrique de révolution.

Dans cet exemple, le second manchon EE est disposé dans le prolongement axial du premier manchon CP en continuité avec celui-ci de manière à permettre la solidarisation des premier CP et second EE manchons par leurs extrémités en contact. Ces extrémités en contact peuvent être avantageusement des brides ou des collerettes en regard se projetant vers l'extérieur.

En position ouverte, l'assemblage des premier CP et second EE manchons peut par exemple être emmanché librement sur l'extrémité mâle EM jusqu'à ce que le second manchon EE soit au moins en partie placé en aval du filetage extérieur FE1 de l'extrémité mâle EM. Dans l'exemple illustré sur la figure 1B, le second manchon EE est placé en partie sur le corps (ou partie courante) PC du composant T et en partie sur la surface annulaire transversale de butée externe SAT, la surface d'étanchéité externe SXE et le filetage extérieur FE1 (dans la zone des filets imparfaits). La surface d'étanchéité externe SXE est adjacente à la butée externe SAT du côté filetage.

Les premier CP et second EE manchons sont de préférence pré-assemblés avant d'être placés sur une extrémité mâle EM.

Pour un tel pré-assemblage, on solidarise les premier CP et second EE manchons l'un à l'autre, par exemple au moyen de moyens complémentaires de fixation, tels que des vis, un clips ou des crochets. Dans l'exemple illustré sur les figures 1A et 1B, cette solidarisation est effectuée, de façon non limitative, au moyen de boulons BLS traversant des trous en correspondance dans les brides ou collerettes d'extrémité en contact des premiers CP et second EE manchons.

Le placement (ou installation) peut préférentiellement s'effectuer comme suit. On emmanche librement (position ouverte du dispositif D) l'ensemble constitué du corps protecteur CP et de l'élément d'étanchéité EE (non muni de moyens de fixation MF ou muni de moyens de fixation MF non serrés) sur l'extrémité mâle EM (suivant la direction XX définissant l'axe du tube T), jusqu'à ce que la partie terminale P2 en forme de collerette du premier manchon (corps protecteur) CP soit au contact de la surface annulaire transversale en extrémité de la partie terminale P1 de l'extrémité mâle EM. Préférentiellement, une fois placé, le second manchon EE s'étend au-delà de la surface annulaire transversale de butée externe jusqu'au corps (ou partie courante) PC du tube T. Puis, on vient serrer radialement et on immobilise le second manchon EE par rapport à l'extrémité mâle EM en serrant les moyens de fixation MF sur le second manchon EE, ce qui définit la position fermée du dispositif D. A cet effet, on peut par exemple utiliser des moyens annulaires de bridage circonférentiel MF, tels qu'un collier (ou une bride ou encore une bande de cerclage).

Les moyens de fixation MF sont avantageusement disposés en aval du filetage extérieur FE1 (et ici au niveau du corps (ou partie courante) PC du tube T en aval de la surface transversale de butée extérieure), de manière à réaliser un serrage étanche (première étanchéité) du second manchon EE sur le composant T en aval du filetage FE1 en position fermée du dispositif D.

On comprendra que dans la position fermée on peut retirer le(s) boulon(s) BLS, puis désemmancher le premier manchon CP seul de l'extrémité mâle EM de manière à inspecter le filetage extérieur FE1 sans endommager ni le second manchon EE (resté en place) ni la surface du filetage extérieur FE1 et notamment une couche de substance lubrifiante déposée à demeure sur cette surface (on peut ensuite ré-emmancher le premier manchon CP si nécessaire). En revanche dans la position fermée le dispositif D ne peut être retiré dans son ensemble de l'extrémité mâle EM qu'à condition de desserrer ou libérer le collier MF pour faire passer le dispositif D en position ouverte.

On se réfère maintenant aux figures 2A à 2C pour décrire un deuxième mode de réalisation d'un dispositif D selon l'invention. Dans ce deuxième mode de réalisation, le premier manchon (corps protecteur) CP est constitué de deux parties complémentaires CP1 et CP2 qui sont agencées de manière à être solidarisées l'une à l'autre par des moyens de fixation complémentaires, par exemple des vis, des clips ou des crochets (non représentés).

L'élément d'étanchéité EE est réalisé sous la forme d'un second manchon qui présente une partie principale PP qui s'étend jusqu'au niveau de la partie terminale P1 de l'extrémité mâle EM. De préférence, et comme illustré, la partie principale PP se termine par une partie terminale P3 en forme de collerette s'étendant vers l'intérieur, destinée à être plaquée étroitement contre la surface annulaire transversale en extrémité de la partie terminale libre P1 de l'extrémité mâle EM afin de former une (seconde) étanchéité locale sur toute sa circonférence à ce niveau.

Au moins la partie principale PP du second manchon EE est destinée à être intercalée entre l'extrémité mâle EM et le premier manchon CP sur au moins une partie de la longueur axiale de ce dernier, dans la position ouverte comme dans la position fermée.

Dans l'exemple illustré, le premier manchon CP recouvre intégralement le second manchon EE, et sa partie terminale P2 forme une collerette s'étendant vers l'intérieur qui vient écraser (ou plaquer) la partie terminale P3 du second manchon EE contre la partie terminale libre P 1 de l'extrémité mâle EM.

On notera qu'en position ouverte le dispositif D peut être emmanché librement sur l'extrémité mâle EM.

Les premier CP et second EE manchons sont par exemple de forme générale cylindrique de révolution. Par ailleurs, le premier manchon CP peut être éventuellement constitué de deux parties complémentaires CP1 et CP2 chacune de forme globalement hémicylindrique et destinées à être solidarisées l'une à l'autre dans la position fermée.

Les moyens de fixation MF peuvent par exemple se présenter sous la forme de moyens annulaires de bridage circonférentiel MF disposés autour du corps protecteur CP, tels qu'un collier (ou une bride ou encore une bande de cerclage), et chargés de déplacer radialement l'élément d'étanchéité EE vers et en contact serrant avec l'extrémité mâle EM et d'immobiliser le corps protecteur CP et l'élément d'étanchéité EE par rapport à l'extrémité mâle EM dans la position fermée.

Comme illustré, le second manchon EE peut éventuellement comprendre un bombement (ou protubérance) extérieur B1 au moins partiellement annulaire, destiné à être comprimé par le premier manchon CP lorsque ce dernier est immobilisé par les moyens de fixation MF dans la position fermée. Dans ce cas, il est préférable que le premier manchon CP comprenne un logement interne L1 moins profond (radialement) que l'épaisseur (radiale) du bombement interne B1. Ce logement interne L1 est destiné à loger partiellement le bombement interne B1 en le comprimant radialement entre le premier manchon CP et l'extrémité mâle EM dans la position fermée.

On notera que le second manchon (élément d'étanchéité) EE peut être éventuellement réalisé dans un matériau transparent afin de permettre la vérification de l'état du filetage extérieur FE1 de l'extrémité mâle EM, lorsqu'il demeure emmanché sur ce dernier mais que le premier manchon CP a été retiré.

Le placement du dispositif D s'effectue comme suit. Tout d'abord, on emmanche librement (position ouverte du dispositif D) le second manchon (élément d'étanchéité) EE suivant la direction XX, jusqu'à ce que sa partie terminale P3 soit au contact de la surface de butée de la partie terminale P1 de l'extrémité mâle EM. Puis, on place les deux parties CP1 et CP2 du premier manchon (corps, protecteur) CP sur le second manchon EE. On exerce ensuite une pression axiale sur les premier CP et second EE manchons jusqu'à ce que la partie terminale P3 soit plaquée contre la surface de butée de la partie terminale P1 de l'extrémité mâle EM, et on solidarise ensemble ces deux parties CP1 et CP2 avec les moyens de fixation complémentaires. Enfin, on immobilise les premier CP et second EE manchons par rapport à l'extrémité mâle EM en serrant les moyens de fixation MF sur les deux parties CP1 et CP2 du premier manchon CP, en aval du filetage extérieur FE1 de l'extrémité mâle EM, ce qui déplace radialement le second manchon (ou bague) EE vers le composant T et définit la position fermée du dispositif D. Dans cette position fermée, le second manchon EE est en contact serrant étanche (première étanchéité) avec le composant T en aval du filetage extérieur FE1 (en partie sur la surface d'étanchéité externe, en partie sur le corps PC du composant T en aval de la surface transversale de butée externe).

On comprendra que dans la position ouverte on peut désemmancher librement de l'extrémité mâle EM le premier manchon CP puis le second manchon EE sans endommager ni le second manchon EE ni la surface du filetage extérieur FE1 et notamment une couche de substance lubrifiante déposée à demeure sur cette surface (on peut ensuite les ré-emmancher librement si nécessaire, comme précédemment). En revanche dans la position fermée le dispositif D est immobilisé sur l'extrémité mâle EM et ne peut être retiré qu'à condition de libérer ou desserrer le collier MF pour faire passer le dispositif D en position ouverte.

On se réfère maintenant aux figures 3A à 3C pour décrire un troisième mode de réalisation d'un dispositif D selon l'invention, variante du deuxième mode de réalisation. Dans ce troisième mode de réalisation, le premier manchon (corps protecteur) CP est monobloc. Il est par exemple de forme générale tronconique de révolution.

L'élément d'étanchéité EE est réalisé sous la forme d'un second manchon, par exemple de forme générale extérieure tronconique de révolution, et s' étendant, une fois placé sur l'extrémité mâle EM, jusqu'au niveau de sa partie terminale P1. Dans ce cas, le premier manchon CP est de forme générale intérieure tronconique de révolution et destiné à être emmanché de manière serrante sur le second manchon EE.

De préférence, et comme illustré, le second manchon (élément d'étanchéité) EE se termine par une partie terminale P3 en forme de collerette s'étendant vers l'intérieur et destinée à être plaquée étroitement contre la surface annulaire transversale en extrémité de la partie terminale libre P1 de l'extrémité mâle EM (surface de butée) afin de former une (seconde) étanchéité locale sur toute sa circonférence à ce niveau. Il est par ailleurs destiné à être intercalé entre l'extrémité mâle EM et le premier manchon CP sur au moins une partie de la longueur axiale de ce dernier.

Dans l'exemple illustré, le premier manchon CP recouvre intégralement le second manchon EE, et sa partie terminale P2 forme une collerette s'étendant vers l'intérieur qui vient écraser (ou plaquer) la partie terminale P3 du second manchon EE contre la partie terminale libre P1 de l'extrémité mâle EM.

On notera qu'en position ouverte le dispositif D peut être emmanché librement sur l'extrémité mâle EM.

Les moyens de fixation MF peuvent par exemple se présenter sous la forme de moyens annulaires de bridage circonférentiel, tels qu'un collier (ou une bride ou encore une bande de cerclage) chargé d'immobiliser le premier manchon (corps protecteur) CP et le second manchon (élément d'étanchéité) EE par rapport à l'extrémité mâle EM en aval de son filetage extérieur FE1, dans la position fermée.

On notera que le second manchon (élément d'étanchéité) EE peut être éventuellement réalisé dans un matériau transparent afin de permettre la vérification de l'état du filetage extérieur FE1 de l'extrémité mâle EM, lorsqu'il demeure emmanché sur ce dernier mais que le premier manchon CP a été retiré.

Le placement du dispositif D peut s'effectuer comme suit. Tout d'abord, les premier CP et second EE manchons sont pré-assemblés par emmanchement serrant jusqu'à ce que la partie terminale P2 du premier manchon CP soit en contact avec la partie terminale P3 du second manchon EE. Puis, on emmanche librement (position ouverte du dispositif D) l'ensemble constitué par le premier manchon (corps protecteur) CP (non muni de moyens de fixation MF ou muni de moyens de fixation. MF non serrés) et le second manchon (élément d'étanchéité) EE suivant la direction XX sur l'extrémité mâle EM, jusqu'à ce que la partie terminale P2 du premier manchon CP vienne écraser (ou plaquer) la partie terminale P3 du second manchon EE contre la surface annulaire transversale en extrémité de la partie terminale libre P1 de l'extrémité mâle EM (surface de butée de l'extrémité mâle EM), ce qui définit la position ouverte du dispositif D. Enfin, on immobilise les premier CP et second EE manchons par rapport à l'extrémité mâle EM en serrant les moyens de fixation MF sur le premier manchon CP en aval du filetage extérieur FE1 de l'extrémité mâle EM, ce qui permet de déplacer radialement la partie du second manchon EE située sous les moyens MF vers le composant T et définit la position fermée du dispositif D. Dans cette position fermée, le second manchon EE est én contact serrant étanche (première étanchéité) avec le composant T en aval du filetage extérieur FE1 (et plus particulièrement immédiatement en aval de la surface annulaire transversale de butée externe).

On notera que dans une variante, on enfile d'abord le second manchon EE sur l'extrémité mâle EM jusqu'à ce que sa partie terminale P3 soit au contact de la surface annulaire transversale en extrémité de la partie terminale libre P1 de l'extrémité mâle EM (surface de butée de l'extrémité mâle). Puis, on emmanche en force le premier manchon CP sur le second manchon EE jusqu'à ce que sa partie terminale P2 vienne écraser (ou plaquer) la partie terminale P3 du second manchon EE contre la surface annulaire transversale en extrémité de la partie terminale libre P1 de l'extrémité mâle EM, ce qui définit la position ouverte du dispositif D.

On comprendra que dans la position ouverte on peut désemmancher librement de l'extrémité mâle EM l'ensemble constitué des premier CP et second EE manchons sans endommager ni le second manchon EE ni la surface du filetage extérieur FE1 et notamment une couche de substance lubrifiante déposée à demeure sur cette surface (on peut ensuite ré-emmancher cet ensemble librement si nécessaire, éventuellement en deux étapes). En revanche dans la position fermée le dispositif D est immobilisé sur l'extrémité mâle EM et ne peut être retiré qu'à condition de libérer le collier MF pour faire passer le dispositif D en position ouverte.

On se réfère maintenant aux figures 4A à 4C pour décrire un quatrième mode de réalisation d'un dispositif D selon l'invention. Dans ce quatrième mode de réalisation, le premier manchon (corps protecteur) CP est monobloc. Il est par exemple de forme générale cylindrique de révolution.

L'élément d'étanchéité EE est réalisé sous la forme d'une bague comportant une partie centrale PC' destinée à recevoir les moyens de fixation MF et prolongée par un bord B2 de forme générale tronconique de révolution.

Cette bague EE peut être emmanchée librement en position ouverte du dispositif D sur l'extrémité mâle EM en aval de son filetage extérieur FE1 (et même ici en partie sur le corps PC du composant T en aval de la surface annulaire transversale de butée externe).

Dans cet exemple, la bague (second manchon) EE est globalement disposée dans le prolongement axial du premier manchon CP.

Le premier manchon (corps protecteur) CP comprend deux parties terminales P2 et P4 opposées. Sa première partie terminale P2 est ici en forme de collerette s'étendant vers l'intérieur et destinée à venir se plaquer contre la surface annulaire transversale en extrémité de la partie terminale P1 de l'extrémité mâle EM (surface de butée) en formant une (seconde) étanchéité locale sur toute sa circonférence à ce niveau. La seconde partie terminale P4 est constituée de première SP1 et seconde SP2 sous-parties.

La première sous-partie SP1 est de forme générale tronconique de révolution. Elle est destinée à être emmanchée en force sur le bord tronconique B2 de la bague EE afin de solidariser le premier manchon CP et la bague EE. La première sous-partie SP1 et le bord tronconique B2 constituent ainsi des moyens complémentaires de fixation.

La seconde sous-partie SP2 prolonge la première sous-partie SP1 en direction de la partie terminale P2. Elle est munie d'un filetage intérieur FI1 destiné à être vissé sur une portion choisie du filetage extérieur FE1 de l'extrémité mâle EM dans la position fermée. Cette portion choisie est ici une sous-partie du filetage extérieur FE1 qui est située à l'opposé de la partie terminale libre P1 et qui est formée de filets imparfaits. Alternativement, elle peut être disposée sur une sous-partie de filets parfaits (située du côté de la partie terminale libre P1).

Les moyens de fixation MF peuvent par exemple se présenter sous la forme de moyens annulaires de bridage circonférentiel, tels qu'un collier (ou une bride ou encore une bande de cerclage), chargés d'immobiliser le second manchon (élément d'étanchéité) EE par rapport à l'extrémité mâle EM en aval de son filetage extérieur FE1, dans la position fermée.

Le premier manchon CP et la bague EE du dispositif D sont de préférence pré-assemblés par emmanchement serrant de leurs moyens complémentaires de fixation (SP1, B2) avant d'être placés sur une extrémité mâle EM. Ce placement peut s'effectuer comme suit. On emmanche librement (position ouverte du dispositif D) l'ensemble constitué du corps protecteur CP et de la bague (élément d'étanchéité) EE (non munie de moyens de fixation MF ou munie de moyens de fixation MF non serrés) sur l'extrémité mâle EM (suivant la direction XX définissant l'axe du tube T), jusqu'à ce que le filetage intérieur FI1 du premier manchon CP s'engage sur le filetage extérieur FE1 de l'extrémité mâle EM, puis on visse le filetage intérieur FI1 sur la portion choisie du filetage extérieur FE1, afin que la bague EE soit sensiblement placée en aval du filetage extérieur FE1. Avantageusement pour cela on visse jusqu'à ce que la collerette formée par la première partie terminale P2 soit plaquée contre la surface annulaire transversale en extrémité de la partie terminale P1 de l'extrémité mâle EM, en réalisant une (seconde) étanchéité locale sur toute sa circonférence à ce niveau. Puis, on immobilise la bague EE par rapport à l'extrémité mâle EM en serrant les moyens de fixation MF sur la bague EE, ce qui déplace radialement la bague EE vers le composant T et définit la position fermée du dispositif D. Dans cette position la bague (second manchon EE) est en contact serrant étanche (première étanchéité) avec le composant T en aval du filetage extérieur FE1 (en fait ici en aval de la surface annulaire transversale de butée externe).

On comprendra que dans la position fermée on peut retirer le corps protecteur (premier manchon) CP de l'extrémité mâle EM en laissant en place la bague EE par simple dévissage du premier manchon CP sans endommager ni la bague EE ni la surface du filetage extérieur FE1 et notamment une couche de substance lubrifiante déposée à demeure sur cette surface (on peut ensuite remettre le premier manchon CP si nécessaire). Cela permet notamment de contrôler l'état du filetage extérieur FE1 de l'extrémité mâle EM. En revanche dans la position fermée le dispositif D est immobilisé sur l'extrémité mâle EM et ne peut être intégralement retiré qu'à condition de retirer le collier MF pour faire passer le dispositif D en position ouverte, puis de dévisser le corps protecteur CP.

On se réfère maintenant aux figures 5A à 5E pour décrire un cinquième mode de réalisation d'un dispositif D selon l'invention. Dans ce cinquième mode de réalisation, le premier manchon (corps protecteur) CP est monobloc. Il est par exemple de forme générale tronconique de révolution. Il comprend deux parties terminales P2 et P5 opposées. Sa première partie terminale P2 s'étend jusqu'à la partie terminale P1 de l'extrémité mâle EM et forme préférentiellement une collerette s'étendant vers l'intérieur qui est destinée à venir se plaquer contre la surface annulaire transversale en extrémité de la partie terminale P1 de l'extrémité mâle EM (surface de butée). La seconde partie terminale P5 est destinée à être placée au-dessus d'une partie au moins de l'élément d'étanchéité EE, par exemple en aval du filetage extérieur FE1 de l'extrémité mâle EM. Le premier manchon CP comprend également une partie intermédiaire P6 munie d'un premier filetage intérieur FI2 destiné à être vissé sur une portion choisie du filetage extérieur FE1 de l'extrémité mâle EM, dans la position fermée.

Cette portion choisie est de préférence située au début de la zone des filets parfaits (sous-partie du filetage située du côté de la partie terminale libre P1 de l'extrémité mâle EM). En effet les filets imparfaits présentent souvent des arêtes vives ou des bavures, entre sommets tronqués et flancs, qui peuvent blesser les filets du premier manchon CP en libérant des débris susceptibles de gêner un vissage ultérieur avec une extrémité femelle.

L'élément d'étanchéité EE est réalisé sous la forme d'une bague comportant une partie principale destinée à être intercalée au moins partiellement entre la seconde partie terminale P5 du premier manchon CP (sur au moins une partie de la longueur axiale de la seconde partie terminale P5) et le composant T en aval du filetage extérieur FE1 de l'extrémité mâle EM. Par ailleurs, la partie principale est prolongée (du côté opposé à la partie terminale P2 du premier manchon CP) par un premier bord B3 découpé en languettes LA et destiné à recevoir les moyens de fixation MF.

La bague EE est apte, en position ouverte du dispositif D, à être emmanchée librement sur l'extrémité mâle EM pour être positionnée en aval de son filetage extérieur FE1.

Les moyens de fixation MF peuvent par exemple se présenter sous la forme de moyens annulaires de bridage circonférentiel MF disposés autour du corps protecteur CP, tels qu'un collier (ou une bride ou encore une bande de cerclage), et chargés de déplacer radialement l'élément d'étanchéité EE, au niveau de ses languettes LA, vers et au contact de l'extrémité mâle EM et d'immobiliser la bague EE par rapport à l'extrémité mâle EM en aval de son filetage extérieur FE1, dans la position fermée. Dans cette position fermée, la bague EE est en contact serrant étanche (première étanchéité) avec le composant T en aval du filetage extérieur FE1.

La bague EE comprend un filetage extérieur FE2 dans la partie destinée à être placée en dessous du premier manchon CP, et la seconde partie terminale P5 du premier manchon CP comprend un second filetage intérieur FI3 destiné à être vissé sur le filetage extérieur FE2 de la bague EE.

Par ailleurs, comme illustré sur la figure 5E, la partie principale de la bague EE peut éventuellement comprendre un bombement (ou protubérance) intérieur B4 au moins partiellement annulaire et destiné à être pressé contre le composant T, en aval du filetage extérieur FE1 de l'extrémité mâle EM, par les moyens MF comme on le verra plus loin.

On notera que le premier manchon (corps protecteur) CP est de préférence vissé sur la bague EE avant que le dispositif D ne soit disposé sur l'extrémité mâle EM (pré-assemblage).

Une fois le corps protecteur CP vissé sur la bague EE (non munie de moyens,de fixation MF ou munie de moyens de fixation MF non serrés), le dispositif D en position ouverte est emmanché librement sur l'extrémité mâle EM suivant la direction XX, jusqu'à ce que le filetage intérieur FI2 du premier manchon CP s'engage sur le filetage extérieur FE1 de l'extrémité mâle EM. Puis, on entraîne en rotation le premier manchon CP afin de visser son filetage intérieur FI2 sur la portion choisie du filetage extérieur FE1, afin que la bague EE soit sensiblement placée en aval du filetage extérieur FE1 de l'extrémité mâle EM. Avantageusement pour cela on visse jusqu'à ce que la première partie terminale P2 du premier manchon CP soit plaquée contre la surface annulaire transversale en extrémité de la partie terminale P1 de l'extrémité mâle EM (surface de butée) en réalisant une (seconde) étanchéité locale sur toute sa circonférence à ce niveau. Puis, à partir de cette position ouverte du dispositif D, on immobilise la bague EE par rapport à l'extrémité mâle EM en serrant les moyens de fixation MF sur la bague EE, ce qui déplace radialement la bague EE vers le composant T et définit la position fermée du dispositif D. Dans cette position le second manchon EE est en contact serrant étanche (première étanchéité) au niveau du bombement intérieur B4 avec le composant T en aval du filetage extérieur FE1.

On comprendra que dans la position fermée on peut retirer le corps protecteur (premier manchon) CP de l'extrémité mâle EM par simple rotation, puis translation, comme illustré sur la figure 5D, sans endommager ni le second manchon EE ni la surface du filetage extérieur FE1 et notamment une couche de substance lubrifiante déposée à demeure sur cette surface (on peut ensuite remettre le corps protecteur CP si nécessaire). Cela permet notamment de contrôler l'état du filetage extérieur FE1 de l'extrémité mâle EM. En revanche dans la position fermée le dispositif D est immobilisé sur l'extrémité mâle EM et ne peut être retiré qu'à condition de retirer le collier MF pour faire passer le dispositif D en position ouverte, puis de dévisser le corps protecteur CP.

On se réfère maintenant aux figures 6A à 6E pour décrire un sixième mode de réalisation d'un dispositif D selon l'invention, variante du cinquième mode de réalisation. Dans ce sixième mode de réalisation, le premier manchon (corps protecteur) CP est monobloc. Il est par exemple de forme générale cylindrique de révolution.

L'élément d'étanchéité EE est réalisé sous la forme d'un second manchon de forme générale cylindrique de révolution. Il s'étend, une fois placé, jusqu'au niveau de la partie terminale P1 de l'extrémité mâle EM. De préférence, et comme illustré, il se termine par une partie terminale P3 en forme de collerette s'étendant vers l'intérieur et destinée à recouvrir et à être plaquée étroitement contre la surface annulaire transversale en extrémité de la partie terminale libre P1 de l'extrémité mâle EM (surface de butée) afin de former une (seconde) étanchéité locale sur toute sa circonférence à ce niveau. Il est par ailleurs destiné à être intercalé entre l'extrémité mâle EM et le premier manchon CP sur au moins une partie de la longueur axiale de ce dernier.

Dans l'exemple illustré, le premier manchon CP recouvre intégralement le second manchon EE, et sa partie terminale P2 en forme de collerette s'étendant vers l'intérieur vient écraser (ou plaquer) la collerette en partie terminale P3 du second manchon EE contre la surface annulaire transversale de la partie terminale libre P1 de l'extrémité mâle EM dans la position fermée.

Le second manchon EE comprend une première partie intermédiaire P7, destinée à être placée en aval du filetage extérieur FE1 de l'extrémité mâle EM et munie d'un filetage extérieur FE3, et une partie d'extrémité P8 qui prolonge la partie intermédiaire P7 (du côté opposé à la partie terminale P2 du premier manchon CP), est découpée en languettes LA et est destinée à recevoir les moyens de fixation MF.

On notera que le second manchon (élément d'étanchéité) EE peut être éventuellement réalisé dans un matériau transparent afin de permettre la vérification de l'état du filetage extérieur FE1 de l'extrémité mâle EM, lorsqu'il demeure immobilisé sur ce dernier (dispositif D en position fermée) mais que le premier manchon CP a été retiré.

Le premier manchon CP comprend deux parties terminales P2 et P5 opposées. Sa première partie terminale P2 s'étend jusqu'à la partie terminale libre P1 de l'extrémité mâle EM et est ici en forme de collerette s'étendant vers l'intérieur et destinée à venir se plaquer contre la partie terminale P3 également en forme de collerette s'étendant vers l'intérieur du second manchon EE afin de l'écraser contre la surface de butée de la partie terminale P1 de l'extrémité mâle EM, en réalisant une (seconde) étanchéité locale sur toute sa circonférence à ce niveau. La seconde partie terminale P5 est destinée à être placée au-dessus de l'élément d'étanchéité EE en aval du filetage extérieur FE1 de l'extrémité mâle EM. Elle comprend un filetage intérieur FI4 destiné à être vissé sur le filetage extérieur FE3 du second manchon EE, après placement de ce dernier sur l'extrémité mâle EM.

Les moyens de fixation MF peuvent par exemple se présenter sous la forme de moyens annulaires de bridage circonférentiel MF, tels qu'un collier (ou une bride ou encore une bande de cerclage), chargés de déplacer radialement le second manchon EE (au niveau de ses languettes LA) vers l'extrémité mâle EM et de l'immobiliser par rapport à l'extrémité mâle EM en aval de son filetage extérieur FE1 dans la position fermée.

Le second manchon EE comprend une seconde partie intermédiaire P9 munie d'un filetage intérieur FI5 destiné à être vissé sur une portion choisie du filetage extérieur FE1 de l'extrémité mâle EM, dans la position fermée. Cette portion choisie est de préférence située au début de la zone des filets parfaits pour les raisons précédemment évoquées à propos du cinquième mode de réalisation.

Par ailleurs, comme illustré sur la figure 6E, la première partie intermédiaire du second manchon peut éventuellement comprendre un bombement (ou protubérance) intérieur B4 annulaire et destiné à être comprimé contre l'extrémité mâle EM en aval du filetage extérieur FE1 de cette dernière, par les moyens de fixation MF dans la position fermée pour constituer la première étanchéité.

Le placement du dispositif D peut s'effectuer comme suit. Tout d'abord, on emmanche librement le second manchon EE (non muni de moyens de fixation MF ou muni de moyens de fixation MF non serrés) sur l'extrémité mâle EM suivant la direction XX jusqu'à ce que le filetage intérieur FI5 de sa partie intermédiaire P6 s'engage sur le filetage extérieur FE1 de l'extrémité mâle EM, puis on visse ce filetage intérieur FI5 sur le filetage extérieur FE1, jusqu'à ce la collerette en partie terminale P3 du second manchon EE soit plaquée contre la surface de butée de la partie terminale P1 de l'extrémité mâle EM. Puis, à partir de cette position (ouverte) du dispositif D, on immobilise le second manchon EE par rapport à l'extrémité mâle EM en serrant les moyens de fixation MF sur les languettes LA de la partie P8 du second manchon EE (position fermée du dispositif D). Dans cette position fermée, le second manchon EE est en contact serrant étanche (première étanchéité) avec le composant T en aval du filetage extérieur FE1 au niveau du bombement B4. Ensuite, on emmanche le premier manchon (corps protecteur) CP suivant la direction XX sur le second manchon EE, jusqu'à ce que le filetage intérieur FI4 de sa seconde partie terminale P5 s'engage sur le filetage extérieur FE3 du second manchon EE. Puis, on entraîne en rotation le premier manchon CP afin de visser son filetage intérieur FI4 sur le filetage extérieur FE3, jusqu'à ce que la collerette de sa première partie terminale P2 vienne plaquer (ou écraser) celle de la partie terminale P3 du second manchon EE. Si les filetages intérieur FI4 et extérieur FE3 sont radialement serrants, ils peuvent augmenter l'écrasement du bombement intérieur B4 contre le composant T et donc améliorer la première étanchéité. Avantageusement pour cela les filetages intérieur FI4 et extérieur FE3 sont situés à l'aplomb du bombement intérieur B4.

On comprendra que dans la position fermée on peut retirer le corps protecteur (premier manchon) CP de l'extrémité mâle EM par simple dévissage des filetages intérieur FI4 et extérieur FE3 sans endommager ni le second manchon EE ni la surface du filetage extérieur FE1 et notamment une couche de substance lubrifiante déposée à demeure sur cette surface (on peut ensuite remettre le corps protecteur CP si nécessaire). Cela permet notamment de contrôler l'état du filetage extérieur FE1 de l'extrémité mâle EM. En revanche dans la position fermée le second manchon EE est immobilisé sur l'extrémité mâle EM et ne peut être retiré qu'à condition de dévisser au moins partiellement le corps protecteur CP puis de retirer le collier MF pour faire passer le dispositif D en position ouverte.

On se réfère maintenant aux figures 7A à 7C pour décrire un septième mode de réalisation d'un dispositif D selon l'invention. Dans ce septième mode de réalisation, le premier manchon (corps protecteur) CP est monobloc. Il comprend deux parties terminales P2 et P5 opposées. Sa première partie terminale P2 s'étend jusqu'à la partie terminale libre P1 de l'extrémité mâle EM et forme préférentiellement une collerette s'étendant vers l'intérieur qui est destinée à venir se plaquer contre la surface annulaire transversale en extrémité de la partie terminale P1 de l'extrémité mâle EM (surface de butée). La seconde partie terminale P5 est par exemple de forme générale cylindrique de révolution. En position ouverte du dispositif D, elle est destinée à être emmanchée librement sur l'extrémité mâle EM en aval de son filetage extérieur FE1 et à recevoir les moyens de fixation MF.

Le premier manchon CP comprend également une partie intermédiaire P10, par exemple de forme générale tronconique de révolution. Cette dernière comprend des première P11 et seconde P12 sous-parties distantes. La première sous-partie P11 définit un logement LO destiné à recevoir l'élément d'étanchéité EE, avant que le premier manchon CP ne soit placé sur l'extrémité mâle EM (pré-assemblage), et à le placer en aval du filetage extérieur FE1 de l'extrémité mâle EM.

L'élément d'étanchéité EE est réalisé sous la forme d'une bague destinée à être solidarisée au premier manchon CP, par exemple par clipsage, à l'intérieur du logement LO défini par la première sous-partie P11 de sa partie intermédiaire P10, de manière à être intercalée au moins partiellement entre ledit premier manchon CP et le composant T en aval du filetage extérieur FE 1.

Les moyens de fixation MF peuvent par exemple se présenter sous la forme de moyens annulaires de bridage circonférentiel qui sont ici un boulon BL (ou un moyen équivalent) apte à coopérer avec la partie terminale P5. Le boulon BL est chargé de déplacer radialement la seconde partie terminale P5 du premier manchon CP vers l'extrémité mâle EM et de l'immobiliser par rapport à l'extrémité mâle EM en aval de son filetage extérieur FE1 dans la position fermée.

La seconde partie terminale P5 du premier manchon CP peut pour cela comporter au moins une ouverture axiale OA entourée partiellement par deux pattes placées en regard l'une de l'autre et munies chacune d'un trou. On peut envisager deux ou plus ouvertures axiales OA réparties sur la périphérie de la partie terminale P5 et autant de boulons BL. Le (ou chaque) boulon BL, destiné à être introduit dans les trous des pattes en regard, peut être vissé au moyen de son écrou EC afin de refermer les bords de l'ouverture axiale OA correspondante en déplaçant radialement la seconde partie terminale P5 du premier manchon CP vers le composant T et en l'immobilisant par rapport à l'extrémité mâle EM en aval de son filetage extérieur FE1 dans la position fermée. On notera que dans cette position fermée, les moyens de fixation MF compriment radialement le second manchon EE entre le logement LO et le composant T en aval de son filetage extérieur FE 1.

La seconde sous-partie P12 de la partie intermédiaire P10 du premier manchon CP est munie d'un filetage intérieur FI6 destiné à être vissé sur une portion choisie du filetage extérieur FE1 de l'extrémité mâle EM, dans la position fermée. Cette portion choisie est de préférence située au début de la zone des filets parfaits pour les raisons précédemment évoquées à propos des cinquième et sixième modes de réalisation.

Le premier manchon CP et la bague EE du dispositif D sont de préférence pré-assemblés (clipsage de la bague EE dans le logement LO) avant d'être placés sur une extrémité mâle EM. Ce placement peut s'effectuer comme suit. On emmanche (translate) (position ouverte du dispositif D) l'ensemble constitué du corps protecteur (premier manchon) CP (non muni de moyens de fixation MF ou muni de moyens de fixation MF non serrés) et de la bague (élément d'étanchéité) EE sur l'extrémité mâle EM (suivant la direction XX définissant l'axe du tube T), jusqu'à ce que le filetage intérieur FI6 de sa partie intermédiaire P10 s'engage sur le filetage extérieur FE1 de l'extrémité mâle EM. Puis, on entraîne en rotation le corps protecteur CP afin de visser son filetage intérieur FI6 sur le filetage extérieur FE1 (sa seconde partie terminale P5 est ainsi emmanchée sur l'extrémité mâle EM), jusqu'à ce que la collerette de sa première partie terminale P2 soit plaquée contre la surface annulaire transversale en extrémité de la partie terminale P1 de l'extrémité mâle EM (surface de butée). Puis, on déplace radialement la partie terminale P5 du corps protecteur CP vers l'extrémité mâle EM en serrant les moyens de fixation MF (BL, EC), ce qui déplace radialement le logement LO vers le composant T et définit la position fermée du dispositif D. Dans la position fermée, les moyens de fixation MF compriment radialement la bague EE entre le logement LO et le composant T en aval du filetage extérieur FE1, ce qui réalise la première étanchéité.

On comprendra que dans la position ouverte on peut retirer le corps protecteur (premier manchon) CP et l'élément d'étanchéité EE de l'extrémité mâle EM en dévissant le corps protecteur CP, sans endommager ni la bague EE ni la surface du filetage extérieur FE1 et notamment une couche de substance lubrifiante déposée à demeure sur cette surface (on peut ensuite remettre l'ensemble constitué du corps protecteur CP et de la bague EE si nécessaire). Cela permet notamment de contrôler l'état du filetage extérieur FE1 de l'extrémité mâle EM. En revanche dans la position fermée le dispositif D est immobilisé sur l'extrémité mâle EM et ne peut être retiré qu'à condition de libérer les moyens de fixation MF pour faire passer le dispositif D en position ouverte, puis de dévisser le corps protecteur CP.

On se réfère maintenant aux figures 8A à 8E pour décrire un huitième mode de réalisation d'un dispositif D selon l'invention, variante du septième mode de réalisation. Ce qui différencie ce huitième mode de réalisation du septième, c'est, d'une part, la forme de la seconde partie terminale P5 du corps protecteur CP et, d'autre part, le type et le mode d'action des moyens de fixation MF. La seconde partie terminale P5 est ici découpée axialement en languettes LA comme dans les cinquième et sixième modes de réalisation de l'invention. Les moyens de fixation MF se présentent ici sous la forme d'un écrou MF destiné à être placé sans être vissé sur la seconde partie terminale P5 du premier manchon CP avant son placement sur l'extrémité mâle. EM... Cet écrou MF comprend un filetage intérieur destiné à être vissé de manière radialement serrante sur un filetage extérieur FE4 défini sur la seconde partie terminale P5 du premier manchon CP, afin de déplacer radialement vers le composant T cette seconde partie terminale P5 au niveau des languettes LA et d'immobiliser l'ensemble constitué du corps protecteur CP et de la bague EE par rapport à l'extrémité mâle EM en aval de son filetage extérieur FE1 dans la position fermée. Par exemple, le filetage extérieur FE4 peut être conique avec le plus grand diamètre disposé du côté extrémité libre de la seconde partie terminale P5, et son diamètre peut être supérieur à celui du filetage de l'écrou MF sur une portion au moins de la longueur axiale du filetage extérieur FE4.

Le dispositif D est donc entièrement pré-assemblé en position ouverte avant d'être placé sur l'extrémité mâle EM du tube T, comme illustré sur les figures 8A à 8D. La position ouverte du dispositif D est définie par la position axiale de l'écrou MF à l'extrémité du filetage extérieur FE4 située du côté de la première partie terminale P2 (petit diamètre du filetage extérieur FE4 ; pas de serrage radial de l'écrou MF sur le filetage extérieur FE4), comme illustré sur la figure 8B.

Le placement du dispositif D peut s'effectuer comme suit. Tout d'abord, on emmanche (translate) le dispositif D pré-assemblé suivant la direction XX jusqu'à ce que le filetage intérieur FI6 de la partie intermédiaire P10 du corps protecteur CP s'engage sur le filetage extérieur FE1 de l'extrémité mâle EM. Puis, on entraîne en rotation le corps protecteur CP afin de visser son filetage intérieur FI6 sur le filetage extérieur FE1, afin que la bague EE soit sensiblement placée en aval du filetage extérieure FE1 de l'extrémité mâle EM. Avantageusement pour cela on visse jusqu'à ce que la collerette de la première partie terminale P2 soit plaquée contre la surface annulaire transversale en extrémité de la partie terminale P1 de l'extrémité mâle EM (surface de butée) (voir les figures 8C et 8E). Puis, on immobilise l'ensemble constitué du corps protecteur CP (au niveau de sa seconde partie terminale P5) et de la bague EE par rapport à l'extrémité mâle EM en vissant l'écrou (moyens de fixation) MF sur le filetage extérieur FE4 de la seconde partie terminale P5 du corps protecteur CP de manière à déplacer l'écrou MF vers l'extrémité libre de la seconde partie terminale P5, ce qui déplace radialement le logement LO vers le composant T et définit la position fermée du dispositif D (illustrée sur la figure 8D). La bague EE est alors comprimée radialement entre le logement LO et le composant T en aval du filetage extérieur FE1, ce qui réalise la première étanchéité.

On comprendra que dans la position ouverte on peut retirer le dispositif D de l'extrémité mâle EM en le dévissant sans endommager ni la bague EE ni la surface du filetage extérieur FE1 et notamment une couche de substance lubrifiante déposée à demeure sur cette surface (on peut ensuite remettre le dispositif D si nécessaire). En revanche dans la position fermée le dispositif D est immobilisé sur l'extrémité mâle EM et ne peut être retiré qu'à condition de dévisser l'écrou MF, en le déplaçant sur le filetage extérieur FE4 vers la première partie terminale P2 pour faire passer le dispositif D en position ouverte, puis de dévisser le dispositif D complet de l'extrémité mâle EM.

On se réfère maintenant aux figures 9A à 9F pour décrire un neuvième mode de réalisation d'un dispositif D selon l'invention, variante du sixième mode de réalisation. Ce qui différencie ce neuvième mode de réalisation du sixième, c'est la forme et le mode de coopération de l'élément d'étanchéité EE avec les moyens de fixation MF. L'élément d'étanchéité EE se présente avantageusement ici sous la forme d'un second manchon transparent.

Ce second manchon EE comprend deux parties P13 et P14. La première partie P13 présente par exemple une forme générale tronconique de révolution. Elle est destinée, une fois placée sur l'extrémité mâle EM, à s'étendre jusqu'au niveau de la partie terminale P1 de l'extrémité mâle EM en se terminant par une partie terminale P3. De préférence, et comme illustré, la partie terminale P3 est en forme de collerette s'étendant vers l'intérieur et est destinée à être plaquée étroitement contre la surface annulaire transversale en extrémité de la partie terminale libre P1 de l'extrémité mâle EM (surface de butée) en réalisant une (seconde) étanchéité locale sur toute sa circonférence à ce niveau. Elle est par ailleurs destinée à être intercalée entre l'extrémité mâle EM et le premier manchon CP. La première partie P13 comprend une sous-partie P15 munie d'un filetage extérieur FE5 et préférentiellement destinée à être placée en aval du filetage extérieur FE1 de l'extrémité mâle EM.

La seconde partie P14 prolonge la première partie P13 dans la direction opposée à la partie terminale P3. Elle est de forme générale extérieure légèrement conique de révolution (grands diamètres du côté de son extrémité libre) et destinée à recevoir les moyens de fixation MF. Elle est de préférence découpée en languettes (LA) comme dans les cinquième, sixième et huitième modes de réalisation.

Les moyens de fixation MF peuvent par exemple se présenter sous la forme de moyens annulaires de bridage circonférentiel MF, tels qu'une bague ou un écrou, et destinés à être placés sur la seconde partie P14 du second manchon EE en position ouverte. Ces moyens de fixation MF sont agencés, en cas de déplacement axial le long des languettes LA vers une extrémité libre de celles-ci et en coopération avec lesdites languettes LA, pour déplacer radialement ces dernières vers l'extrémité mâle EM, et immobiliser le second manchon EE par rapport à l'extrémité mâle EM en aval de son filetage extérieur FE1 dans la position fermée.

Dans une variante illustrée sur les figures 9A à 9F, les moyens de fixation MF se présentent sous la forme d'un écrou. La seconde partie P14 du second manchon EE comprend alors un filetage extérieur conique FE6 (grands diamètres du côté de l'extrémité libre de la seconde partie P14) sur lequel peut être placé l'écrou MF dans la position ouverte, puis sur lequel le filetage intérieur de l'écrou MF peut être vissé de manière progressivement radialement serrante (en déplaçant axialement l'écrou MF vers les grands diamètres du filetage extérieur FE6) afin de déplacer radialement le second manchon EE vers le composant T et de l'immobiliser sur l'extrémité mâle EM en aval de son filetage extérieur FE1 dans la position fermée.

Le corps protecteur CP se présente sous la forme d'un premier manchon par exemple de forme générale tronconique de révolution. Il comprend deux parties terminales P2 et P16 opposées. Sa première partie terminale P2 s'étend jusqu'à la partie terminale libre P1 de l'extrémité mâle EM et forme préférentiellement une collerette s'étendant vers l'intérieur qui est destinée à venir se plaquer contre la partie terminale P3 du second manchon EE afin de l'écraser contre la surface annulaire transversale en extrémité de la partie terminale P1 de l'extrémité mâle EM (surface de butée). La seconde partie terminale P16 est destinée à être placée au-dessus de la sous-partie P15 de l'élément d'étanchéité EE. Elle comprend un filetage intérieur FI7 destiné à être vissé sur le filetage extérieur FE5 de la sous-partie P15 du second manchon EE.

Comme illustré sur la figure 9F, le second manchon EE comprend au niveau de sa première partie P13 (partie intermédiaire entre P3 et P14) une sous-partie P17 munie d'un filetage intérieur FI8 destiné à être vissé sur une portion choisie du filetage extérieur FE1 de l'extrémité mâle EM, dans la position fermée. Cette portion choisie est de préférence située au début de la zone des filets parfaits pour les raisons précédemment évoquées à propos des cinquième à huitième modes de réalisation.

Par ailleurs, comme illustré sur la figure 9F, la sous-partie P15 du second manchon EE peut éventuellement comprendre un bombement (ou protubérance) intérieur B5 au moins partiellement annulaire et destiné à être comprimé radialement contre l'extrémité mâle EM dans la position fermée.

On notera que le corps protecteur CP est de préférence vissé sur le second manchon EE, par exemple jusqu'à ce que la collerette P2 soit en contact avec la collerette P3, avant que le dispositif D ne soit disposé sur l'extrémité mâle EM. L'écrou MF est positionné sur le filetage extérieur FE6 du côté des petits diamètres du filetage (du côté de la première partie P13) et définit ainsi une position ouverte du dispositif D.

Une fois le corps protecteur CP vissé sur le second manchon EE et l'écrou MF placé (mais non serré), le dispositif D est emmanché dans cette position ouverte sur l'extrémité mâle EM suivant la direction XX, jusqu'à ce que le filetage intérieur FI8 du second manchon EE s'engage sur le filetage extérieur FE1 de l'extrémité mâle EM. Puis, on entraîne en rotation le corps protecteur CP afin de visser le filetage intérieur FI8 sur le filetage extérieur FE1 (la seconde partie P 14 du second manchon EE est ainsi emmanchée sur l'extrémité mâle EM), afin que la seconde partie P14 et la sous-partie P15 du second manchon EE soient sensiblement placées en aval du filetage extérieur FE1 de l'extrémité mâle EM. Avantageusement pour cela on visse le second manchon EE jusqu'à ce que sa première partie terminale P3 soit plaquée contre la surface annulaire transversale en extrémité de la partie terminale P1 de l'extrémité mâle EM (surface de butée). Puis, on immobilise le second manchon EE par rapport à l'extrémité mâle EM en vissant l'écrou (moyens de fixation) MF sur le filetage extérieur FE6 de sa seconde partie P14 vers les diamètres croissants du filetage extérieur FE6, ce qui définit la position fermée du dispositif D (illustrée sur les figures 9D et 9E). Dans cette position le second manchon EE est en contact serrant étanche (première étanchéité) au moins au niveau du bombement intérieur B5 avec le composant T en aval du filetage extérieur FE1.

Avantageusement, l'extrémité libre de la seconde partie P14 du second manchon EE présente un renflement extérieur formant butée axiale pour limiter la course axiale de l'écrou vers ladite extrémité libre et l'empêcher de sortir du filetage extérieur FE6 en position fermée.

On comprendra que dans la position fermée on peut retirer le corps protecteur CP de l'extrémité mâle EM en le dévissant sans endommager ni le second manchon EE ni la surface du filetage extérieur FE1 et notamment une couche de substance lubrifiante déposée à demeure sur cette surface (on peut ensuite remettre le corps protecteur CP si nécessaire). En revanche dans la position fermée le dispositif D est immobilisé sur l'extrémité mâle EM et ne peut être retiré qu'à condition de dévisser l'écrou MF (vers la première partie P13) pour faire passer le dispositif D en position ouverte, puis de dévisser l'ensemble constitué du corps protecteur CP et du second manchon EE de l'extrémité mâle EM.

Dans une variante non représentée, l'écrou MF peut être remplacé par une bague intérieurement lisse et la seconde partie P14 du second manchon EE peut être non filetée conique. Au lieu de visser ou dévisser l'écrou MF, il convient alors de pousser axialement la bague lisse conique d'une extrémité à l'autre de la seconde partie P14 afin que la bague vienne serrer ou desserrer les languettes LA de la seconde partie P 14. Une telle variante mettant en oeuvre une bague lisse conique peut également être utilisée à la place de l'écrou MF dans le huitième mode de réalisation de l'invention.

On se réfère maintenant aux figures 10 à 18 pour décrire un dixième mode de réalisation d'un dispositif D selon l'invention. Ce qui différencie ce dixième mode de réalisation du neuvième, c'est la forme de l'élément d'étanchéité EE et le mode de coopération des moyens de fixation MF avec l'élément d'étanchéité EE. Ce dernier se présente ici sous la forme d'une bague solidarisée, par exemple par clipsage, au corps protecteur (premier manchon) CP.

Cette bague EE est de type déformable et comporte une partie centrale P40, située entre des première P19 et seconde P23 extrémités.

Préférentiellement, pour permettre sa déformation radiale par flambement, la bague déformable EE possède une longueur axiale comprise entre 4 fois et 40 fois son épaisseur radiale. A titre d'exemple, la bague EE peut avoir une épaisseur radiale de l'ordre de 1,5 mm à 5 mm et une longueur axiale de l'ordre de 20 mm à 60 mm. Une trop faible longueur axiale et/ou une trop forte épaisseur radiale ne favorise(nt) pas une importante déformation radiale. Une trop faible épaisseur radiale et/ou une trop forte longueur axiale ne favorise(nt) pas un serrage suffisant de la bague EE sur le composant T.

Préférentiellement aussi, la partie centrale P40 de la bague déformable EE possède un plus faible diamètre que ses extrémités P19 et P23, de façon à orienter le sens de sa déformation radiale (voir figures 15 et 18).

Le premier manchon CP est par exemple de forme générale cylindrique de révolution. Il comprend des première P2 et seconde P18 parties terminales opposées. Sa première partie terminale P2 s'étend jusqu'à la partie terminale libre P1 de l'extrémité mâle EM et forme préférentiellement une collerette s'étendant vers l'intérieur et destinée à venir se plaquer contre la partie terminale P1 du second manchon EE afin de l'écraser contre la surface annulaire transversale en extrémité de l'extrémité mâle EM.

La seconde partie terminale P18 est destinée à recevoir une première extrémité P19 de la bague EE afin de la placer en aval du filetage extérieur FE1 de l'extrémité mâle EM. Dans le prolongement de la seconde partie terminale P 18 se trouve également une première partie intermédiaire P20, qui est munie d'un filetage extérieur FE7.

Les moyens de fixation MF se présentent sous la forme d'un écrou comportant des première P21 et seconde P22 parties. La première partie P21 est destinée à recevoir la seconde extrémité P23 de la bague EE. La seconde partie P22 est munie d'un filetage intérieur FI9 destiné à être solidarisé au filetage extérieur FE7 de la première partie intermédiaire P20 du premier manchon CP afin de permettre un déplacement axial de l'écrou MF sur le filetage extérieur FE7 du premier manchon CP. Ce déplacement axial est destiné à exercer sur les première P19 et deuxième P23 extrémités de la bague EE un effort axial de compression dirigé vers sa partie centrale P40 de manière à faire flamber la bague EE et à arquer sa partie centrale P40 en la plaquant contre le composant T en aval de son filetage extérieur FE1 dans la position fermée. Des exemples de configuration des première P21 et seconde P22 parties sont observables sur la figure 18. Plus précisément, la seconde partie P22 définit par exemple une gorge circulaire GC dans laquelle est placée la seconde extrémité P23 de la bague EE, une fois le dispositif D pré-assemblé.

Comme cela est illustré sur la figure 11, la première extrémité P19 de la bague EE comprend par exemple des saillies radiales SR destinées à être introduites dans des ouvertures OV réalisées dans la seconde partie terminale P18 du premier manchon CP. La bague EE peut ainsi être solidarisée par clipsage à la seconde partie terminale P18 du premier manchon CP, comme illustré sur la figure 13.

On peut ensuite solidariser l'écrou MF au premier manchon CP en engageant au moins un filet de son filetage intérieur FI9 dans le filetage extérieur FE7 du premier manchon CP. Cet engagement peut se faire par vissage ou bien par clipsage. Pour autoriser un tel clipsage, on peut par exemple utiliser un filetage extérieur FE7 et/ou un filetage intérieur FI9 présentant un profil en dent de scie du type de celui illustré schématiquement sur la figure 16. Dans cet exemple non limitatif, les dents du filetage possèdent deux flancs d'inclinaisons différentes par rapport à l'axe XX du dispositif D. L'inclinaison du flanc le moins incliné est inférieure ou égale à trois fois le complément à 90 degrés de l'angle d'inclinaison du flanc le plus incliné (soit une première pente douce (définie par l'angle B) et une seconde pente raide (définie par l'angle A). Par exemple on choisit B = 2,5A.

On comprendra, en observant les figures 15 et 18 que lorsque l'on visse l'écrou MF sur le corps protecteur CP en direction de la partie terminale P2 (flèche F1), on exerce une contrainte axiale (compression) sur la seconde extrémités P23 de la bague EE, et donc on contraint sa partie centrale P40 à se arquer intérieurement en direction de la paroi extérieure du composant T (flèche F2) et donc à se plaquer radialement par flexion contre la paroi extérieure du composant T en aval du filetage extérieur FE1 dans la position fermée.

Le corps protecteur CP comprend également une seconde partie intermédiaire P24 comprenant un filetage intérieur FI10 destiné à être vissé sur une portion choisie du filetage extérieur FE1 de l'extrémité mâle EM de préférence sur une sous partie du filetage FE1 à filets parfaits (pour les raisons précédemment évoquées à propos des cinquième à neuvième modes de réalisation).

On notera, comme illustré sur la figure 18, que le premier manchon CP peut éventuellement comprendre un épaulement (ou protubérance) extérieur B6 définissant une butée axiale pour l'écrou MF.

Le dispositif D est tout d'abord pré-assemblé en position ouverte : la bague EE est clipsée sur la partie terminale P18 du corps protecteur CP et engagée dans la gorge GC de l'écrou MF dont le filetage intérieur FI9 est engagé sur l'extrémité du filetage extérieur FE7 du corps protecteur CP du côté de sa partie terminale P18.

Le placement du dispositif D peut s'effectuer comme suit. Tout d'abord, on emmanche (translate) le dispositif D pré-assemblé en position ouverte suivant la direction XX (figure 17A), jusqu'à ce que le filetage intérieur FI10 de la partie intermédiaire P24 du corps protecteur CP s'engage sur le,filetage extérieur FE1 de l'extrémité mâle EM. Puis, on entraîne en rotation le corps protecteur CP afin de visser son filetage intérieur FI10 sur le filetage extérieur FE1, afin que la bague EE soit sensiblement placée en aval du filetage extérieur FE1 de l'extrémité mâle EM. Avantageusement pour cela on visse le corps protecteur CP jusqu'à ce que la collerette de sa première partie terminale P2 soit plaquée contre la surface annulaire transversale en extrémité de la partie terminale P1 de l'extrémité mâle EM (surface de butée), comme illustré sur la figure 17B. Puis, on immobilise le corps protecteur CP par rapport à l'extrémité mâle EM en vissant l'écrou (moyens de fixation) MF sur le filetage extérieur FE7 de la première partie intermédiaire P20 du corps protecteur CP en direction de la partie terminale P2 jusqu'à une position choisie, ce qui définit la position fermée du dispositif D (illustrée sur la figure 17C).

On comprendra que dans la position ouverte on peut retirer le dispositif D de l'extrémité mâle EM en le dévissant sans endommager ni la bague EE ni la surface du filetage extérieur FE1 et notamment une couche de substance lubrifiante déposée à demeure sur cette surface (on peut ensuite remettre le dispositif D si nécessaire). En revanche dans la position fermée le dispositif D est immobilisé sur l'extrémité mâle EM et ne peut être retiré qu'à condition de dévisser l'écrou MF totalement, pour faire passer le dispositif D en position ouverte, puis de dévisser le corps protecteur CP de l'extrémité mâle EM.

L'agencement du dispositif D selon ce dixième mode de réalisation permet de réaliser un déplacement radial important (de l'ordre de un à plusieurs millimètres) de la partie centrale P40 de la bague EE, ce qui permet d'absorber les variations dimensionnelles permises pour le composant T et son extrémité mâle EM sans endommager la bague EE ou la surface du filetage extérieur FE1 lors du placement ou du retrait du dispositif D en position ouverte, tout en assurant une excellente immobilisation du dispositif D et une excellente première étanchéité en position fermée.

On se réfère maintenant à la figure 19 pour décrire un onzième mode de réalisation d'un dispositif D selon l'invention, variante du dixième mode de réalisation. Ce qui différencie ce onzième mode de réalisation du dixième, c'est le mode de solidarisation des moyens de fixation MF au corps protecteur CP. Cette solidarisation s'effectue en effet par l'intermédiaire d'un élément de fixation EF.

Plus précisément, le premier manchon CP (qui est par exemple de forme générale cylindrique de révolution) comprend une seconde partie terminale P25, opposée à sa première partie terminale P2, destinée à recevoir la première extrémité P19 de la bague EE pour la placer en aval du filetage extérieur FE1 de l'extrémité mâle EM, et comportant un premier épaulement (ou protubérance) extérieur B7 qui définit une butée axiale.

Le premier manchon CP comprend également une première partie intermédiaire P26 qui comprend une seconde protubérance extérieure B8 définissant une butée anti-recul axial, de forme choisie, pour l'élément de fixation EF et située à une distance choisie de la première butée extérieure B7 en fonction de l'extension axiale de l'élément de fixation EF. Comme illustré, il peut éventuellement comprendre une troisième butée B9 à une distance choisie de la seconde protubérance extérieure B8 et d'extension radiale sensiblement supérieure à celle de la seconde protubérance extérieure B8, afin d'obliger , l'élément de fixation EF à emprisonner la seconde protubérance extérieure B8 dans un logement homologue LR.

On notera que la seconde protubérance extérieure B8 peut éventuellement posséder un profil dissymétrique avec un flanc relativement peu incliné et un flanc abrupt.

L'élément de fixation EF présente par exemple une forme générale cylindrique de révolution. Il comprend un logement intérieur LR, dont la forme est homologue à celle de la seconde protubérance extérieure B8, ainsi qu'un filetage extérieur FE8. Il est destiné à être initialement placé entre le premier épaulement extérieur B7 et la seconde protubérance extérieure B8, avant que le dispositif D ne soit placé sur l'extrémité mâle EM dans la position ouverte.

Par ailleurs, l'écrou (moyens de fixation) MF comporte toujours une partie P21 dans laquelle est définie la gorge circulaire GC destinée à recevoir la seconde extrémité P23 de la bague EE, ainsi qu'une seconde partie P22 munie d'un filetage intérieur FI11 destiné à être vissé sur le filetage extérieur FE8 de l'élément de fixation EF avant que le dispositif D ne soit placé sur l'extrémité mâle EM, dans la position ouverte.

L'écrou MF peut être déplacé axialement vers la troisième butée B9 par poussée sur sa face frontale d'extrémité libre en entraînant l'élément de fixation EF de sorte que dans la position fermée la seconde protubérance extérieure B8 (du corps protecteur CP) soit bloquée à l'intérieur de son logement LR, interdisant ainsi un déplacement axial en sens inverse de l'élément de fixation EF, et en arquant la bague EE de manière à la plaquer contre le composant T en aval du filetage extérieur FE1. Le corps protecteur CP est alors immobilisé par rapport à l'extrémité mâle EM dans la position fermée et la bague EE est écrasée en contact serrant étanche (première étanchéité) contre la paroi extérieure du composant T en aval du filetage extérieur FE1.

Le filetage intérieur FI11 de l'écrou MF et le filetage extérieur FE8 de l'élément de fixation EF peuvent éventuellement coopérer ensemble de manière à autoriser le dévissage de l'écrou MF. Cela permet le passage du dispositif D d'une position fermée à une positon ouverte en vue de son retrait de l'extrémité mâle EM, et si besoin le revissage de l'écrou MF afin que le dispositif D puisse retourner dans la position fermée une fois le dispositif D replacé sur l'extrémité mâle.

Comme indiqué ci-avant, le dispositif D peut, dans plusieurs de ses modes de réalisation, être placé sur une extrémité mâle EM, au moyen d'une première machine adaptée à cet effet.

L'invention peut être également vue sous la forme d'un premier procédé dédié à la mise en place automatisée d'au moins un neuvième ou dixième exemple de réalisation de dispositif D de protection sur l'extrémité mâle EM d'un composant T d'un joint fileté tubulaire.

Ce premier, procédé consiste à pré-assembler le corps protecteur CP, l'écrou MF et la bague EE en position ouverte, puis à visser le dispositif D ainsi constitué jusqu'à ce que le corps protecteur CP soit appliqué contre la surface annulaire transversale d'extrémité de la partie terminale libre P1 de l'extrémité mâle EM de manière à réaliser une seconde étanchéité, et finalement à visser l'écrou MF afin de définir la position fermée du dispositif D et la première étanchéité.

Ce premier procédé peut être mis en oeuvre au moyen d'une première machine M1. Cette première machine M1 comprend un moyen de maintien MM chargé de maintenir l'extrémité mâle EM, un premier moyen de vissage MV1 chargé de visser le corps protecteur CP sur l'extrémité mâle EM, un moyen de détection MD chargé de détecter la mise en contact du corps protecteur CP contre la surface annulaire transversale d'extrémité de la partie terminale libre P1 de l'extrémité mâle EM et d'arrêter le premier moyen de vissage MV1 en cas de détection d'une mise en contact, et un second moyen de vissage MV2 chargé de visser l'écrou MF jusqu'à une position choisie pour définir la position fermée du dispositif D.

Les moyens de vissage MV1, MV2 peuvent être, par exemple, des jeux de mors couplés à des moteurs électriques ou hydrauliques. Le moyen de détection MD peut être, par exemple, un contact de fin de course ou préférentiellement un moyen de mesure du couple de vissage du moyen de vissage MV1. La position choisie peut par exemple être déterminée par un contact de fin de course ou par un seuil sur un moyen de mesure du couple de vissage du second moyen de vissage MV2.

L'invention peut être également vue sous la forme d'un deuxième procédé dédié à la mise en place automatisée d'au moins un dixième ou onzième exemple de réalisation de dispositif D de protection sur l'extrémité mâle d'un composant d'un joint fileté tubulaire. Ce deuxième procédé consiste à pré-assembler le corps protecteur CP, l'écrou MF, éventuellement l'élément de fixation EF et la bague EE en position ouverte, puis à visser le dispositif D jusqu'à appliquer le corps protecteur CP contre la surface annulaire transversale d'extrémité de la partie terminale libre P1 de l'extrémité mâle EM afin de réaliser une seconde étanchéité, et à pousser axialement sur l'écrou MF jusqu'à une position choisie, de manière à arquer la bague EE et ainsi définir la position fermée du dispositif D et la première étanchéité.

Dans ce deuxième procédé, la position choisie peut résulter de l'appui de l'écrou MF contre l'épaulement extérieur B6 du corps protecteur CP.

Dans ce deuxième procédé, lorsque le dispositif D comprend un élément de fixation EF, la position choisie peut par exemple être celle dans laquelle la seconde protubérance extérieure B8 du corps protecteur CP est bloquée dans le logement LR de l'élément de fixation EF.

Ce deuxième procédé peut être mis en oeuvre au moyen d'une deuxième machine M2. Cette deuxième machine M2 comprend un moyen de maintien MM' chargé de maintenir l'extrémité mâle EM, un moyen de vissage MV chargé de visser le corps protecteur CP sur l'extrémité mâle EM, un moyen de détection MD' chargé de détecter la mise en contact du corps protecteur CP contre la surface annulaire transversale d'extrémité de la partie terminale libre P1 de l'extrémité mâle EM et d'arrêter le moyen de vissage MV en cas de détection d'une mise en contact, et un moyen de poussée axiale MPA chargé de pousser axialement sur l'écrou MF jusqu'à une position choisie pour définir la position fermée du dispositif D.

Le moyen de vissage MV peut être, par exemple, un jeu de mors couplés à un moteur électrique ou hydraulique. Le moyen de poussée axiale peut être, par exemple, un vérin. Le moyen de détection MD peut être, par exemple, un contact de fin de course ou préférentiellement un moyen de mesure du couple de vissage du moyen de vissage MV. La position choisie peut par exemple être déterminée par un contact de fin de course ou par un seuil sur un moyen de mesure de la force de poussée axiale.

L'invention peut être également vue sous la forme d'un troisième procédé dédié à l'inspection de l'extrémité mâle EM d'un composant d'un joint fileté tubulaire, lorsque cette extrémité est munie de l'un au moins des exemples de réalisation de dispositif de protection D décrits ci-avant (en particulier les premier, troisième à sixième et neuvième).

Ce troisième procédé consiste à désolidariser le corps protecteur CP et l'élément d'étanchéité EE, puis à retirer le corps protecteur CP de l'extrémité mâle EM en laissant en place l'élément d'étanchéité EE, puis à inspecter l'extrémité mâle EM, puis à replacer le corps protecteur CP sur l'extrémité mâle EM, et à solidariser de nouveau le corps protecteur CP et l'élément d'étanchéité EE.

L'invention ne se limite pas aux modes de réalisation de dispositif de protection décrits ci-avant, seulement à titre d'exemple, mais elle englobe toutes les variantes que pourra envisager l'homme de l'art dans le cadre des revendications ci-après.

Ainsi, l'invention concerne également d'autres types d'extrémité mâle que celui décrit ci-avant. Par exemple, les premier à quatrième modes de réalisation peuvent s'appliquer à une extrémité mâle pour un joint tubulaire fileté manchonné (du type VAM TOP) et les cinquième à onzième modes de réalisation peuvent s'appliquer à une extrémité mâle pour un joint fileté tubulaire «flush» (du type VAM FJL). L'invention concerne également des extrémités mâles de joints filetés tubulaires dits « semi-flush » qui présentent un faible écart de diamètre entre extrémités mâle et femelle, comme par exemple les joints VAM SLIJ II (décrits dans le document brevet EP 0767335) qui comprennent deux portions filetées coniques disposées sur deux étages distincts et séparées par une butée centrale, chaque partie filetée comprenant une sous-partie à filets parfaits entre deux sous-parties de filets évanouissants, et deux surfaces d'étanchéité métal/métal, une en amont des parties filetées, l'autre en aval.

Dans ces cas où l'extrémité mâle présente des éléments en aval des parties filetées (surface de butée, surface d'étanchéité), la première étanchéité est préférentiellement réalisée sur une partie courante (ou corps) du composant au delà de tout élément de l'extrémité mâle filetée.

Dans le cas d'un joint fileté tubulaire sans butée dans la partie terminale de l'extrémité mâle, notamment si la partie terminale libre ne présente pas une surface annulaire transversale de largeur suffisante, la seconde étanchéité peut être réalisée en variante en amont du filetage et, le cas échéant, en amont de la surface d'étanchéité métal/métal.

## Revendications

1. Dispositif (D) de protection pour une extrémité mâle (EM) d'un composant (T) d'un joint fileté tubulaire pour le forage et l'exploitation de puits d'hydrocarbures, munie extérieurement d'au moins un filetage (FE1) et comprenant une partie terminale libre (P1), ledit dispositif (D) comprenant i) un corps protecteur (CP) réalisé sous la forme d'un premier manchon et agencé pour protéger une partie au moins dudit filetage extérieur (FE1) et ladite partie terminale libre (P1), et ii) un élément d'étanchéité (EE) propre à être placé au contact, d'une part, dudit composant (T), au moins dans une partie située en aval dudit filetage extérieur (FE1) de l'extrémité mâle (EM), et d'autre part, dudit corps protecteur (CP) de manière à assurer une première étanchéité en aval dudit filetage extérieur (FE1), **caractérisé en ce qu'**il comprend des moyens de fixation (MF) agencés pour déplacer ledit élément d'étanchéité (EE) et/ou ledit corps protecteur (CP) radialement vers ledit composant (T) en définissant des positions dites « ouverte» et « fermée » du dispositif (D) dans lesquelles l'élément d'étanchéité (EE) et/ou le corps protecteur (CP) sont respectivement sans contact et en contact serrant avec ledit composant (T), et **en ce que** la première étanchéité est obtenue en position fermée dudit dispositif (D).

2. Dispositif (D) de protection selon la revendications 1, **caractérisé en ce que** la première étanchéité est assurée au niveau d'une partie courante (PC) dudit composant (T) située immédiatement en aval de l'extrémité mâle (EM), **en ce qu'**il comprend des moyens propres à assurer une seconde étanchéité au niveau de la partie terminale libre (P1) de ladite extrémité mâle (EM), la seconde étanchéité étant assurée sur une surface annulaire transversale en extrémité de la partie terminale libre (P1), et **en ce que** le corps protecteur (CP) recouvre une surface annulaire transversale d'extrémité de la partie terminale libre (P1).

3. Dispositif (D) de protection selon l'une des revendications précédentes, **caractérisé en ce que** ledit élément d'étanchéité (EE) est réalisé sous la forme d'un second manchon, ledit second manchon (EE) étant réalisé dans un matériau transparent.

4. Dispositif selon l'une des revendications 1 à 2, **caractérisé en ce que** ledit élément d'étanchéité (EE) est réalisé sous la forme d'une bague déformable comportant une partie centrale (P40) entre des première (P 19) et seconde (P23) extrémités, ladite partie centrale (P40) étant propre à être arquée (F2) vers ledit composant (T) suite à un effort axial de compression (F1) sur les extrémités (P19, P23) de ladite bague déformable (EE) et à être plaquée contre ledit composant (T) en aval du filetage extérieur (FE1) de l'éxtrémité mâle (EM) dans la position fermée.

5. Dispositif selon la revendication 4, **caractérisé en ce que** la partie centrale (P40) de la bague déformable (EE) possède un plus petit diamètre que ses extrémités (P19, P23).

6. Dispositif selon l'une des revendications 4 à 5, **caractérisé en ce que** ledit premier manchon (CP) comprend i) une partie terminale (P18) agencée de manière à recevoir la première extrémité (P19) de ladite bague (EE) pour la placer en aval du filetage extérieur (FE1) de l'extrémité mâle (EM), et ii) une première partie intermédiaire (P20) munie d'un filetage extérieur (FE7), et **en ce que** lesdits moyens de fixation (MF) comprennent un écrou comportant une première partie (P21) agencée de manière à recevoir la seconde extrémité (P23) de ladite bague (EE) et une seconde partie (P22) munie d'un filetage intérieur (FI9) agencé pour être solidarisé audit filetage extérieur (FE7) de la première partie intermédiaire (P20) du premier manchon (CP), de manière à permettre un déplacement axial de l'écrou (MF) sur le filetage extérieur (FE7) dudit premier manchon (CP), ledit déplacement axial étant propre à exercer sur les première et deuxième extrémités (P19, P23) de ladite bague (EE) un effort axial (F1) dirigé vers la partie centrale de la bague (EE) de manière à l'arquer en la plaquant contre ledit composant (T) en aval du filetage extérieur (FE1) de ladite extrémité mâle (EM) dans la position fermée.

7. Dispositif selon la revendication 6, **caractérisé en ce que** ledit filetage extérieur (FE7) de la première partie intermédiaire (P20) dudit premier manchon (CP) est agencé pour permettre le déplacement axial, par clipsage, de l'écrou (MF) par rapport audit filetage extérieur (FE7) dudit premier manchon (CP).

8. Dispositif selon la revendication 7, **caractérisé en ce que** ledit filetage extérieur (FE7) de la première partie intermédiaire (P20) dudit premier manchon (CP) et/ou ledit filetage intérieur (FI9) de ladite bague (EE) possède(nt) un profil de filet en dent de scie, et ledit filetage extérieur (FE7) de la première partie intermédiaire (P20) dudit premier manchon (CP) et/ou ledit filetage intérieur (FI9) de ladite bague (EE) possède deux flancs d'inclinaisons différentes par rapport à J'axe du dispositif l'inclinaison (B) du Flanc le moins incliné étant inférieure ou égale à trois fois le complément à 90 degrés (A) de l'angle d'inclinaison du Flanc le plus incliné.

9. Dispositif selon l'une des revendications 4 à 5, **caractérisé en ce que** ladite partie terminale (P25) dudit premier manchon (CP) comporte un premier épaulement extérieur (B7) définissant une butée axiale, **en ce que** ledit premier manchon (CP) comprend une première partie intermédiaire (P26) munie d'une seconde protubérance extérieure (B8) définissant une butée anti-recul axial, **en ce que** ledit dispositif (D) comprend en outre un élément de fixation (EF) comprenant un logement intérieur (LR) de forme sensiblement identique à celle de ladite seconde protubérance anti-recul axial (B8) et un filetage extérieur (FE8), et propre à être initialement placé entre ledit premier épaulement extérieur (B7) et ladite seconde protubérance extérieure (B8) avant placement dudit dispositif (D) pré-assemblé sur ladite extrémité mâle (EM) dans la position ouverte, **en ce que** lesdits moyens de fixation (MF) comprennent un écrou comportant une première partie (P21) agencée de manière à recevoir une seconde extrémité (P23) de ladite bague (EE) et une seconde partie (P22) munie d'un filetage intérieur (FI11) agencé pour être vissé sur ledit filetage extérieur (FE8) de l'élément de fixation (EF) avant placement dudit dispositif (D) pré-assemblé sur ladite extrémité mâle (EM) dans la position ouverte, et **en ce que** ledit écrou (MF) est propre à être déplacé axialement en entraînant ledit élément de fixation (EF) de sorte que, en position fermée, ladite seconde protubérance extérieure (B8) soit bloquée à l'intérieur de son logement (LR) interdisant ainsi un déplacement axial en sens inverse dudit élément de fixation (EF), et en arquant ladite bague (EE) de manière à la plaquer contre ledit composant (T) en aval du filetage extérieur (FE1) de ladite extrémité mâle (EM) dans la position fermée.

10. Dispositif selon la revendication 9, **caractérisé en ce que** ladite seconde protubérance extérieure (B8) possède un profil dissymétrique avec un flanc relativement peu incliné et un flanc abrupt, et ledit filetage intérieur (FI11) de l'écrou (MF) et ledit filetage extérieur (FE8) de l'élément de fixation (EF) autorisent par leur coopération le dévissage dudit écrou (MF), permettant ainsi le passage du dispositif (D) d'une position fermée à une position ouverte en vue du retrait dudit premier manchon (CP) et si besoin le revissage dudit écrou (MF), permettant ainsi le retour du dispositif (D) dans une position fermée.

11. Dispositif selon l'une des revendications précédentes, **caractérisé en ce que** ladite extrémité mâle (EM) est revêtue en usine, où elle est fabriquée, d'une couche mince de substance lubrifiante en vue de son vissage sur chantier de forage sur une extrémité femelle correspondante d'un autre composant.

12. Procédé de mise en place d'un dispositif de protection (D) selon la revendication 6, sur une extrémité mâle (EM) d'un composant (T) d'un joint fileté tubulaire pour le forage et l'exploitation de puits d'hydrocarbures, le corps protecteur (CP) recouvrant une surface annulaire transversale d'extrémité de la partie terminale libre (P1), ladite partie terminale (P18;P25) du premier manchon (CP) comprenant des ouvertures (OV), et ladite première partie (P19) de la bague (EE) comprenant des saillies radiales propres à être logées par clipsage à l'intérieur desdites ouvertures (OV), ledit premier manchon (CP) étant muni d'un filetage intérieur (F110) agencé pour être vissé sur une portion choisie dudit filetage extérieur (FE1) de l'extrémité mâle (EM), **caractérisé en ce que** l'on pré-assemble le corps protecteur (CP), l'écrou (MF) et la bague (EE) en position ouverte, puis on visse le dispositif (D) jusqu'à appliquer le corps protecteur (CP) contre la surface annulaire transversale d'extrémité de la partie terminale libre (P1) de l'extrémité mâle (EM) de manière à réaliser une seconde étanchéité, et on visse l'écrou (MF) de manière à définir la position fermée du dispositif (D) et la première étanchéité.

13. Procédé de mise en place d'un dispositif de protection (D) selon les revendications 7 à 9 sur une extrémité mâle (EM) d'un composant (T) d'un joint fileté tubulaire pour le forage et l'exploitation de puits d'hydrocarbures, le corps protecteur (CP) recouvrant une surface annulaire transversale d'extrémité de la partie terminale libre (P1), ladite partie terminale (P18;P25) du premier manchon (CP) comprenant des ouvertures (OV), et ladite première partie (P19) de la bague (EE) comprenant des saillies radiales propres à être logées par clipsage à l'intérieur desdites ouvertures (OV), ledit premier manchon (CP) étant muni d'un filetage intérieur (F110) agencé pour être vissé sur une portion choisie dudit filetage extérieur (FE1) de l'extrémité mâle (EM), **caractérisé en ce que** l'on pré-assemble le corps protecteur (CP), l'écrou (MF), l'élément de fixation (EF) et la bague (EE) en position ouverte, puis on visse le dispositif (D) jusqu'à appliquer le corps protecteur (CP) contre la surface annulaire transversale d'extrémité de la partie terminale libre (P1) de l'extrémité mâle (EM) de manière à réaliser une seconde étanchéité, et on pousse axialement sur l'écrou (MF) jusqu'à une position choisie, de manière à arquer la bague (EE) et ainsi définir la position fermée du dispositif et la première étanchéité.

14. Procédé de mise en place d'un dispositif de protection (D) selon la revendication 13, **caractérisé en ce qu'**en présence d'un premier manchon (CP) comprenant un épaulement extérieur (B6) définissant une butée axiale pour ledit écrou (MF) en position fermée du dispositif (D), ladite position choisie résulte de l'appui de l'écrou (MF) contre ledit épaulement extérieur (B6) du corps protecteur.

15. Procédé de mise en place d'un dispositif de protection (D) selon la revendication 13, **caractérisé en ce que** le dispositif (D) est réalisé selon la revendication 9, et **en ce que** ladite position choisie est celle dans laquelle la seconde protubérance extérieure (B8) du corps protecteur (CP) est bloquée dans le logement (LR) de l'élément de fixation (EF).

## Claims

1. A protective device (D) for a male end (EM) of a component (T) of a threaded tubular connection for drilling and working hydrocarbon wells, externally provided with at least one threading (FE1) and comprising a free terminal portion (P1), said device (D) comprising i) a protector body (CP) produced in the form of a first sleeve and arranged to protect at least part of said external threading (FE1) and said free terminal portion (P1), and ii) a sealing element (EE) suitable to be positioned in contact firstly with said component (T), at least at a portion located downstream of said external threading (FE1) of the male end (EM), and secondly with said protector body (CP), so as to provide a first seal downstream of said external threading (FE1), **characterized in that** it comprises fixing means (MF) for displacing said sealing element (EE) and/or said protector body (CP) radially towards said component (T) defining "open" and "closed" positions of the device (D) in which the sealing element (EE) and/or the protector body (CP) are respectively not in contact and in tight contact with said component (T), and **in that** the first seal is obtained in the closed position of said device (D).

2. A protective device (D) according to claim 1, **characterized in that** the first seal is provided on a regular section (PC) of said component (T) located immediately downstream of the male end (EM), **in that** it comprises means for providing a second seal at the free terminal portion (P1) of said male end (EM), the second seal being provided on a transverse annular end surface of the free terminal portion (P1), and **in that** the protector body (CP) covers a transverse annular end surface of the free end portion (P1).

3. A protective device (D) according to one of the preceding claims, **characterized in that** said sealing element (EE) is produced in the form of a second sleeve, said second sleeve (EE) being produced in a transparent material.

4. A device according to one of claims 1 and 2, **characterized in that** said sealing element (EE) is produced in the form of a deformable ring comprising a central portion (P40) between the first (P19) and second (P23) ends, said central portion (P40) being capable of being bended (F2) towards said component (T) under an axial compressive force (F1) on the ends (P19, P23) of said deformable ring (EE) and of being flattened against said component (T) downstream of the external threading (FE1) of the male end (EM) in the closed position.

5. A device according to claim 4, **characterized in that** the central portion (P40) of the deformable ring (EE) has a smaller diameter than its ends (P19, P23).

6. A device according to one of claims 4 to 5, **characterized in that** said first sleeve (CP) comprises i) a terminal portion (P18) arranged so as to receive the first end (P19) of said ring (EE) to position it downstream of the external threading (FE1) of the male end (EM), and ii) a first intermediate portion (P20) provided with an external threading (FE7), and **in that** said fixing means (MF) comprise a nut comprising a first portion (P21) arranged so as to receive the second end (P23) of said ring (EE) and a second portion (P22) provided with an internal threading (FI9) arranged to be attached to said external threading (FE7) of the first intermediate portion (P20) of the first sleeve (CP), in order to allow axial displacement of the nut (MF) on the external threading (FE7) of said first sleeve (CP), said axial displacement being capable of exerting, on the first and second ends (P19, P23) of said ring (EE), an axial force (F1) directed towards the central portion of the ring (EE) so as to bend it and flatten it against said component (T) downstream of the external threading (FE1) of said male end (EM) in the closed position.

7. A device according to claim 6, **characterized in that** said external threading (FE7) of the first intermediate portion (P20) of said first sleeve (CP) is arranged to allow axial displacement, by clip fitting, of the nut (MF) with respect to said external threading (FE7) of said first sleeve (CP).

8. A device according to claim 7, **characterized in that** said external threading (FE7) of the first intermediate portion (P20) of said first sleeve (CP) and/or said internal threading (FI9) of said ring (EE) has (have) a saw tooth thread profile, and said external threading (FE7) of the first intermediate portion (P20) of said first sleeve (CP) and/or said internal threading (FI9) of said ring (EE) has two flanks with different inclinations with respect to the axis of the device (D), the inclination (B) of the least inclined flank being less than or equal to three times the complement to 90 degrees (A) of the angle of inclination of the most inclined flank.

9. A device according to one of claims 4 to 5, **characterized in that** said terminal portion (P25) of said first sleeve (CP) comprises a first external shoulder (B7) defining an axial abutment, **in that** said first sleeve (CP) comprises a first intermediate portion (P26) provided with a second external protuberance (B8) defining an axial anti-return abutment, **in that** said device (D) further comprises a fixing element (EF) comprising an internal recess (LR) with a form substantially identical to that of said second axial anti-return protuberance (B8) and an external threading (FE8) capable of initially being placed between said first external shoulder (B7) and said second external protuberance (B8) before placing said pre-assembled device (D) on said male end (EM) in the open position, **in that** said fixing means (MF) comprise a nut comprising a first portion (P21) arranged so as to receive a second end (P23) of said ring (EE) and a second portion (P22) provided with an internal threading (FI11) arranged to be screwed on said external threading (FE8) of the fixing element (EF) before placing said pre-assembled device (D) on said male end (EM) in the open position, and **in that** said nut (MF) is capable of being axially displaced, entraining said fixing element (EF) so that in the closed position, said second external protuberance (B8) having locked inside its recess (LR), thereby preventing axial displacement in the reverse direction of said fixing element (EF), and by bending said ring (EE) to flatten it against said component (T) downstream of the external threading (FE1) of said male end (EM) in the closed position.

10. A device according to claim 9, **characterized in that** said second external protuberance (B8) has a dissymmetric profile with a relatively less inclined flank and an abrupt flank, and said internal threading (FI11) of the nut (MF) and said external threading (FE8) of the fixing element (EF) cooperate to allow said nut (MF) to be unscrewed, thereby allowing passage of the device (D) from a closed position to an open position to remove said first sleeve (CP) and if necessary to screw said nut (MF) up again, thereby allowing the device (D) to return to a closed position.

11. A device according to one of the preceding claims, **characterized in that** said male end (EM) is factory coated, on manufacturing site, with a thin layer of lubricating substance with a view to being screwed on the drill site onto a corresponding female end of another component.

12. A method for positioning a protective device (D) according to claim 6 on a male end (EM) of a component (T) of a threaded tubular connection for drilling and working hydrocarbon wells, the protector body (CP) covering a transverse annular end surface of the free end portion (P1), said terminal portion (P18; P25) of the first sleeve (CP) comprising openings (OV), and said first portion (P19) of the ring (EE) comprising radial projections which can be housed inside said openings (OV) by clip fitting, said first sleeve (CP) being provided with an internal threading (FI10) arranged to be screwed onto a selected portion of said external threading (FE1) of the male end (EM), **characterized in that** the protector body (CP), nut (MF) and ring (EE) are pre-assembled in an open position, then the device (D) is screwed up until the protector body (CP) is applied against the transverse annular end surface of the free terminal portion (P1) of the male end (EM) so as to produce a second seal, and the nut (MF) is screwed to define the closed position of the device (D) and the first seal.

13. A method for positioning a protective device (D) according to claims 7 to 9 on a male end (EM) of a component (T) of a threaded tubular connection for drilling and working hydrocarbon wells, the protector body (CP) covering a transverse annular end surface of the free end portion (P1), said terminal portion (P18; P25) of the first sleeve (CP) comprising openings (OV), and said first portion (P19) of the ring (EE) comprising radial projections which can be housed inside said openings (OV) by clip fitting, said first sleeve (CP) being provided with an internal threading (FI10) arranged to be screwed onto a selected portion of said external threading (FE1) of the male end (EM), **characterized in that** the protector body (CP), nut (MF) and ring (EE) are pre-assembled in an open position, then the device (D) is screwed up to apply the protector body (CP) against the transverse annular end surface of the free terminal portion (P1) of the male end (EM), **characterized in that** the protector body (CP), nut (MF), fixing element (EF) and ring (EE) are pre-assembled in an open position, then the device (D) is screwed up until the protector body (CP) is applied against the transverse annular end surface of the free terminal portion (P1) of the male end (EM) so as to produce a second seal, and the nut (MF) is axially thrust to a selected position, so as to bend the ring (EE) and thereby define the closed position of the device and the first seal.

14. A method for positioning a protective device (D) according to claim 13, **characterized in that** in the presence of a first sleeve (CP) comprising an external shoulder (B6) defining an axial abutment for said nut (MF) in the closed position of the device (D), said selected position results from the nut (MF) bearing against said external shoulder (B6) of the protector body.

15. A method for positioning a protective device (D) according to claim 13, **characterized in that** the device (D) is produced in accordance with claim 9, and **in that** said selected position is that in which the second external protuberance (B8) of the protector body (CP) is locked in the recess (LR) of the fixing element (EF).

## Patentansprüche

1. Vorrichtung (D) zum Schutz eines Steckerendes (EM) einer Komponente (T) einer Schraubverbindung von Rohren für die Förderung von Kohlenwasserstoffen und die Ausbeutung von Kohlenwasserstoffquellen, wobei die Rohrkomponente außen mit mindestens einem Gewinde (FE1) versehen ist und einen freien Endbereich (P1) aufweist, wobei die Vorrichtung (D) aufweist: i) einen Schutzkörper (CP) in Form einer ersten Muffe, die so angeordnet ist, dass sie mindestens einen Teil des Außengewindes (FE1) und des Bereichs des freien Endes (P1) schützt, und ii) ein Dichtelement (EE), das geeignet ist, einerseits in Kontakt mit der Komponente (T) mindestens in einem Bereich hinter dem Außengewinde (FE1) des Steckerendes (EM), und andererseits in Kontakt mit dem Schutzkörper (CP) zu treten, derart, dass eine erste Abdichtung hinter dem Außengewinde (FE1) gewährleistet wird, **dadurch gekennzeichnet, dass** die Vorrichtung Befestigungsmittel (MF) aufweist, die angeordnet sind, um das Dichtelement (EE) und/oder den Schutzkörper (CP) radial auf die Komponente (T) zu zu bewegen, wodurch eine "offene" und eine "geschlossene" Stellung der Vorrichtung (D) definiert werden, indem das Dichtelement (EE) und/oder der Schutzkörper (CP) jeweils ohne Kontakt mit und in Berührungskontakt mit der Komponente (T) sind, und dadurch, dass die erste Dichtung in geschlossener Stellung der Vorrichtung (D) erhalten wird.

2. Schutzvorrichtung (D) nach Anspruch 1, **dadurch gekennzeichnet, dass** die erste Abdichtung auf der Höhe eines gewöhnlichen Bereichs (PC) der Komponente (T) erfolgt, der unmittelbar hinter dem Steckerende (EM) liegt, dadurch, dass die Vorrichtung Mittel zur Gewährleistung einer zweiten Abdichtung auf der Höhe des Bereichs des freien Ende (P1) des Steckerendes (EM) aufweist, wobei die zweite Abdichtung auf einer querverlaufenden Ringfläche am Ende des Bereichs des freien Endes (P1) sichergestellt wird, und dadurch, dass der Schutzkörper (CP) eine querverlaufende Ringfläche am Ende des Bereichs des freien Endes (P1) abdeckt.

3. Schutzvorrichtung (D) nach einem der vorstehenden Ansprüche, **dadurch gekennzeichnet, dass** das Dichtelement (EE) in Form einer zweiten Muffe realisiert ist, und die zweite Muffe (EE) aus einem transparenten Material hergestellt ist.

4. Vorrichtung nach einem der Ansprüche 1 bis 2, **dadurch gekennzeichnet, dass** das Dichtelement (EE) die Form eines verformbaren Rings hat mit einem mittleren Bereich (P40) zwischen einem ersten (P19) und einem zweiten (P23) Ende, wobei der mittlere Bereich (P40) zur Komponente (T) hin gebogen werden kann infolge einer axialen Druckkraft (F1) auf die Enden (P19, P23) des verformbaren Rings (EE) und gegen die Komponente (T) hinter dem Außengewinde (FE1) des Steckerendes (EM) in der geschlossenen Stellung angedrückt werden kann.

5. Vorrichtung nach Anspruch 4, **dadurch gekennzeichnet, dass** der mittlere Bereich (P40) des verformbaren Rings (EE) einen kleineren Durchmesser aufweist als seine Enden (P19, P23).

6. Vorrichtung nach einem der Ansprüche 4 bis 5, **dadurch gekennzeichnet, dass** die erste Muffe (CP) aufweist: i) einen Endbereich (P18), der so angeordnet ist, dass er ein erstes Ende (P 19) des Rings (EE) aufnimmt, um es hinter dem Außengewinde (FE1) des Steckerendes (EM) anzuordnen, und ii) einen ersten Zwischenbereich (P20), der mit einem Außengewinde (FE7) versehen ist, und dadurch, dass die Befestigungsmittel (MF) eine Schraubenmutter aufweisen mit einem ersten Bereich (P21), der so angeordnet ist, dass er das zweite Ende (P23) des Rings (EE) und einen zweiten Bereich (P22), welcher mit einem Innengewinde (F19) versehen ist, aufnimmt, der angeordnet ist, um an dem Außengewinde (FE7) des ersten Zwischenbereichs (P20) der ersten Muffe (CP) befestigt zu werden, derart, dass eine axiale Verschiebung der Schraubenmutter (MF) auf dem Außengewinde (FE7) der ersten Muffe (CP) ermöglicht wird, wobei die axiale Verschiebung auf die ersten und zweiten Enden (P 19, P23) des Rings (EE) eine axiale Kraft (F1) ausüben kann, die auf den mittleren Bereich des Rings (EE) gerichtet ist, derart, dass dieser gebogen wird, indem er sich gegen die Komponente (T) hinter dem Außengewinde (FE1) des Steckerendes (EM) in der geschlossenen Stellung andrückt.

7. Vorrichtung nach Anspruch 6, **dadurch gekennzeichnet, dass** das Außengewinde (FE7) des ersten Zwischenbereichs (P20) der ersten Muffe (CP) so angeordnet ist, dass es die axiale Bewegung durch Verrastung der Schraubenmutter (MF) bezüglich des Außengewindes (FE7) der ersten Muffe (CP) ermöglicht.

8. Vorrichtung nach Anspruch 7, **dadurch gekennzeichnet, dass** das Außengewinde (FE7) des ersten Zwischenbereichs (P20) der ersten Muffe (CP) und/oder das Innengewinde (F19) des Rings (EE) ein Sägezahngewindeprofil aufweist/aufweisen, und das Außengewinde (FE7) des ersten Zwischenbereichs (P20) der ersten Muffe (CP) und/oder das Innengewinde (F19) des Rings (EE) zwei bezüglich der Achse der Vorrichtung (D) unterschiedlich geneigte Flanken aufweist/aufweisen, wobei die Neigung (B) der am wenigsten geneigten Flanke kleiner oder gleich dem Dreifachen des Komplements zu 90° (A) des Neigungswinkels der stärker geneigten Flanke ist.

9. Vorrichtung nach einem der Ansprüche 4 bis 5, **dadurch gekennzeichnet, dass** der Endbereich (P25) der ersten Muffe (CP) eine erste äußere Schulter (B7) aufweist, die einen axialen Anschlag definiert, dass die erste Muffe (CP) einen ersten Zwischenbereich (P26) aufweist, der mit einer zweiten äußeren Protuberanz (B8) versehen ist, die einen axialen Antirücklaufanschlag definiert, dass die Vorrichtung (D) außerdem ein Befestigungselement (EF) mit einer inneren Lagerfläche (LR) in einer Form, die im Wesentlichen identisch zu der Form der zweiten axialen Antirücklauf-Protuberanz (B8) ist, und ein Außengewinde (FE8) aufweist und anfänglich zwischen der ersten Außenschulter (B7) und der zweiten äußeren Protuberanz (B8) angeordnet werden kann, bevor die auf dem Steckerende (EM) in der offenen Stellung vormontierte Vorrichtung (D) angebracht wird, dadurch, dass die Befestigungsmittel (MF) eine Schraubenmutter aufweisen mit einem ersten Bereich (P21), der so angeordnet ist, dass er ein zweites Ende (P23) des Rings (EE) und einen zweiten Bereich (P22) mit einem Innengewinde (FI11) aufnehmen kann, das angeordnet ist, um auf das Außengewinde (FE8) des Befestigungselements (EF) geschraubt zu werden, bevor die auf dem Steckerende (EM) in der offenen Stellung vormontierte Vorrichtung (D) angeordnet wird, und dadurch, dass die Schraubenmutter (MF) axial bewegt werden kann, indem das Befestigungselement (EF) derart angetrieben wird, dass entweder die zweite äußere Protuberanz (B8) im Inneren ihrer Lagerfläche (LR) blockiert ist, was somit eine Axialbewegung in Gegenrichtung des Befestigungselements (EF) verbietet, und indem der Ring (EE) derart verbogen wird, dass er gegen die Komponente (T) hinter dem Außengewinde (FE1) des Steckerendes (EM) in der geschlossenen Stellung angedrückt wird.

10. Vorrichtung nach Anspruch 9, **dadurch gekennzeichnet, dass** die zweite äußere Protuberanz (B8) ein asymmetrisches Profil aufweist mit einer relativ wenig geneigten Flanke und einer abrupt abfallenden Flanke, und das Innengewinde (FI11) der Schraubenmutter (MF) und das Außengewinde (FE8) des Befestigungselements (EF) durch ihr Zusammenwirken das Lösen der Schraubenmutter (MF) ermöglichen, wodurch somit der Übergang der Vorrichtung (D) aus einer geschlossenen Stellung in eine offene Stellung zum Lösen der ersten Muffe (CP) ermöglich wird, und bei Bedarf das Wiederverschrauben der Schraubenmutter (MF), was somit die Rückkehr der Vorrichtung (D) in eine geschlossene Stellung ermöglicht.

11. Vorrichtung nach einem der vorstehenden Ansprüche, **dadurch gekennzeichnet, dass** das Steckerende (EM) in der Fabrik, wo es hergestellt wurde, mit einer dünnen Schicht aus einer schmierenden Substanz beschichtet ist für seine Verschraubung an einer Förderstätte auf ein entsprechendes Buchsenende einer weiteren Komponente.

12. Verfahren zum Anbringen einer Schutzvorrichtung (D) nach Anspruch 6 auf ein Steckerende (EM) einer Komponente (T) einer Gewindeverbindung von Rohren für die Kohlenwasserstoffförderung und die Ausbeutung von Kohlenwasserstoffförderstätten, wobei der Schutzkörper (CP) eine querverlaufende Endringfläche des Endbereichs des freien Endes (P1) abdeckt, der Endbereich (P18; P25) der ersten Muffe (CP) Öffnungen (OV) aufweist, und der erste Bereich (P19) des Rings (EE) radiale Vorsprünge aufweist, die dazu geeignet sind, durch Verrasten im Inneren der Öffnungen (OV) gelagert zu werden, wobei die erste Muffe (CP) mit einem Innengewinde (FI10) versehen ist, welches angeordnet ist, um auf einen gewählten Bereich des Außengewindes (FE1) des Steckerendes (EM) geschraubt zu werden, **dadurch gekennzeichnet, dass** der Schutzkörper (CP), die Schraubenmutter (MF) und der Ring (EE) in offener Stellung vormontiert werden, und die Vorrichtung (D) aufgeschraubt wird, bis der Schutzkörper (CP) gegen die querverlaufende Endringfläche des Bereichs des freien Endes (P1) des Steckerendes (EM) derart anliegt, dass eine zweite Abdichtung erzeugt wird, und die Schraubenmutter (MF) so verschraubt wird, dass die geschlossene Stellung der Vorrichtung (D) und der ersten Abdichtung definiert werden.

13. Verfahren zum Anbringen einer Schutzvorrichtung (D) nach den Ansprüchen 7 bis 9 auf einem Steckerende (EM) einer Komponente (T) einer Gewindeverbindung von Rohren für die Kohlenwasserstoffförderung und die Ausbeutung von Kohlenwasserstoffförderstätten, wobei der Schutzkörper (CP) eine querverlaufende Endringfläche des Bereichs des freien Endes (P1) abdeckt, der Endbereich (P18; P25) der ersten Muffe (CP) Öffnungen (OV) aufweist, und der erste Bereich (P19) des Rings (EE) radiale Vorsprünge aufweist, die im Inneren der Öffnungen (OV) verrastet werden können, wobei die erste Muffe (CP) mit einem Innengewinde (FI10) versehen ist, welches angeordnet ist, um auf einen gewählten Bereich des Außengewindes (FE1) des Steckerendes (EM) geschraubt zu werden, **dadurch gekennzeichnet, dass** der Schutzkörper (CP), die Schraubenmutter (MF), das Befestigungselement (EF) und der Ring (EE) in offener Stellung vormontiert werden, und die Vorrichtung (D) aufgeschraubt wird, bis der Schutzkörper (CP) gegen die querverlaufende Endringfläche des Bereichs des freien Endes (P1) des Steckerendes (EM) derart anliegt, dass eine zweite Abdichtung erzeugt wird, und auf die Schraubenmutter (MF) ein axialer Druck ausgeübt wird bis zu einer gewählten Stellung, derart, dass der Ring (EE) gebogen wird und somit die geschlossene Stellung der Vorrichtung und der ersten Abdichtung definiert werden.

14. Verfahren zur Anbringung einer Schutzvorrichtung (D) nach Anspruch 13, **dadurch gekennzeichnet, dass** in Anwesenheit einer ersten Muffe (CP) mit einer Außenschulter (B6), die einen axialen Anschlag für die Schraubenmutter (MF) in geschlossener Stellung der Vorrichtung (D) bildet, die gewählte Position sich aus dem Andruck der Schraubenmutter (MF) gegen die Außenschulter (B6) des Schutzkörpers ergibt.

15. Verfahren zur Anbringung einer Schutzvorrichtung (D) nach Anspruch 13, **dadurch gekennzeichnet, dass** die Vorrichtung (D) nach Anspruch 9 hergestellt ist, und dadurch, dass die gewählte Stellung die Stellung ist, in der die zweite äußere Protuberanz (B8) des Schutzkörpers (CP) in dem Lager (LR) des Befestigungselements (EF) blockiert ist.
